(19) Europäisches Patentamt / European Patent Office / Office européen des brevets

(11) **EP 4 084 124 A1**

(12) **EUROPEAN PATENT APPLICATION**

(43) Date of publication:
**02.11.2022 Bulletin 2022/44**

(21) Application number: **22157721.6**

(22) Date of filing: **21.02.2022**

(51) International Patent Classification (IPC):
*H01M 4/131* (2010.01)    *H01M 4/485* (2010.01)
*H01M 4/62* (2006.01)    *H01M 50/204* (2021.01)

(52) Cooperative Patent Classification (CPC):
H01M 4/131; H01M 4/485; H01M 4/622;
H01M 4/625; H01M 50/204

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.04.2021   JP 2021075092**

(71) Applicant: **Kabushiki Kaisha Toshiba**
**Tokyo 105-0023 (JP)**

(72) Inventors:
• **UEDA, Kakuya**
  **Minato-ku, Tokyo, 105-0023 (JP)**

• **YAMASHITA, Yasunobu**
  **Minato-ku, Tokyo, 105-0023 (JP)**
• **HARADA, Yasuhiro**
  **Minato-ku, Tokyo, 105-0023 (JP)**
• **TAKAMI, Norio**
  **Minato-ku, Tokyo, 105-0023 (JP)**
• **MATSUNO, Shinsuke**
  **Minato-ku, Tokyo, 105-0023 (JP)**

(74) Representative: **Hoffmann Eitle**
**Patent- und Rechtsanwälte PartmbB**
**Arabellastraße 30**
**81925 München (DE)**

(54) **ELECTRODE, SECONDARY BATTERY, BATTERY PACK, VEHICLE, METHOD FOR MANUFACTURING ELECTRODE-PRODUCING SLURRY, AND METHOD FOR MANUFACTURING ELECTRODE**

(57)    According to one approach, an electrode (3) is provided. The electrode (3) includes a current collector (3a) and an active material-containing layer (3b) formed on the current collector (3a) and containing active material particles. A median diameter (D50) calculated from a volume-based frequency distribution chart obtained by a laser diffraction/scattering method for the active material particles is in the range of 1.2 $\mu$m to 4.0 $\mu$m. In the frequency distribution chart, a proportion of an integrated amount of particles having a particle size of 2.0 $\mu$m or less is in the range of 36% to 62% with respect to the entire active material particles on a volume basis.

F I G. 12

**Description**

FIELD

The present disclosure relates generally to an electrode, a secondary battery, a battery pack, a vehicle, a method for manufacturing an electrode-producing slurry, and a method for manufacturing an electrode.

BACKGROUND

Recently, secondary batteries, such as a nonaqueous electrolyte secondary battery like a lithium ion secondary battery, have been actively researched and developed as a high energy-density battery. The secondary batteries, such as a nonaqueous electrolyte secondary battery, are anticipated as a power source for vehicles such as hybrid electric automobiles, electric cars, an uninterruptible power supply for base stations for portable telephones, or the like. Therefore, the secondary battery is demanded to, in addition to having a high energy density, be excellent in other performances such as rapid charge-discharge performances and long-term reliability, as well. For example, not only is the charging time remarkably shortened in a secondary battery capable of rapid charge and discharge, but the battery is also capable of improving motive performances in vehicles such as hybrid electric automobiles, and efficient recovery of regenerative energy of motive force.

In order to enable rapid charge/discharge, electrons and lithium ions must be able to migrate rapidly between the positive electrode and the negative electrode. However, when a battery using a carbon-based negative electrode is repeatedly subjected to rapid charge and discharge, precipitation of dendrite of metallic lithium on the electrode may sometimes occur, raising concern of heat generation or ignition due to internal short circuits.

In light of this, a battery using a metal composite oxide in a negative electrode in place of a carbonaceous material has been developed. In particular, in a battery using an oxide of titanium in the negative electrode, rapid charge and discharge can be stably performed. Such a battery also has a longer life than in the case of using a carbon-based negative electrode.

However, compared to carbonaceous materials, oxides of titanium have a higher potential relative to metallic lithium. That is, oxides of titanium are more noble. Furthermore, oxides of titanium have a lower capacity per weight. Therefore, a battery using an oxide of titanium for the negative electrode has a problem that the energy density is low.

For example, the electrode potential an oxide of titanium is about 1.5 V (vs. Li/Li$^+$) relative to metallic lithium, which is higher (i.e., more noble) in comparison to potentials of carbon based negative electrodes. The potential of an oxide of titanium is attributed to the redox reaction between Ti$^{3+}$ and Ti$^{4+}$ upon electrochemical insertion and extraction of lithium, and is therefore electrochemically restricted. It is also a fact that rapid charge/discharge of lithium ions can be performed stably at a high electrode potential of about 1.5 V (vs. Li/Li$^+$).

On the other hand, considering the capacity per unit weight, the theoretical capacity of titanium dioxide (anatase structure) is about 165 mAh/g, and the theoretical capacity of spinel type lithium-titanium composite oxides such as $Li_4Ti_5O_{12}$ is about 180 mAh/g. On the other hand, the theoretical capacity of a general graphite based electrode material is 385 mAh/g and greater. As such, the capacity density of an oxide of titanium is significantly lower than that of the carbon based negative electrode material. This is due to there being only a small number of lithium-insertion sites in the crystal structure, and lithium tending to be stabilized in the structure, and thus, substantial capacity being reduced.

In view of the above circumstances, a new electrode material containing Ti and Nb has been studied. Such a niobium-titanium composite oxide material is expected to have a high charge/discharge capacity. Particularly, a composite oxide represented by $TiNb_2O_7$ has a high theoretical capacity exceeding 380 mAh/g. Therefore, the niobium-titanium composite oxide is expected as a high-capacity material which is substituted for $Li_4Ti_5O_{12}$. However, when a particle size of an active material is reduced for the purpose of attaining a high output, there is a problem that high-temperature storage performance is deteriorated due to an increase in specific surface area.

BRIEF DESCRIPTION OF THE DRAWINGS

FIG. 1 is a schematic view illustrating a crystal structure of a niobium-titanium composite oxide $Nb_2TiO_7$;
FIG. 2 is a schematic view illustrating the crystal structure of FIG. 1 when observed from another direction;
FIG. 3 is a cross-sectional view schematically illustrating an example of a secondary battery according to an approach;
FIG. 4 is an enlarged cross-sectional view of a section A of the secondary battery illustrated in FIG. 3;
FIG. 5 is a partially cut-out perspective view schematically illustrating another example of the secondary battery according to the approach;
FIG. 6 is an enlarged cross-sectional view of a section B of the secondary battery illustrated in FIG. 5;

FIG. 7 is a perspective view schematically illustrating an example of a battery module according to an approach;

FIG. 8 is an exploded perspective view schematically illustrating an example of a battery pack according to an approach;

FIG. 9 is a block diagram illustrating an example of an electric circuit of the battery pack illustrated in FIG. 8;

FIG. 10 is a cross-sectional view schematically illustrating an example of a vehicle according to an approach;

FIG. 11 is a diagram schematically illustrating another example of the vehicle according to the approach; and

FIG. 12 is a diagram showing particle size distribution charts according to Examples and a Comparative Example.

DETAILED DESCRIPTION

According to the first approach, an electrode is provided. The electrode includes a current collector and an active material-containing layer formed on the current collector and containing active material particles. The active material particles include a monoclinic niobium-titanium composite oxide. A median diameter (D50) calculated from a volume-based frequency distribution chart obtained by a laser diffraction/scattering method for the active material particles is in the range of 1.2 $\mu$m to 4.0 $\mu$m. The frequency distribution chart has two peaks in the range of 0.5 $\mu$m to 8.0 $\mu$m. In the frequency distribution chart, a proportion of an integrated amount of particles having a particle size of 2.0 $\mu$m or less is in the range of 36% to 62% with respect to the entire active material particles on a volume basis.

According to another approach, a secondary battery is provided. The secondary battery includes the electrode according to the approach.

According to another approach, a battery pack is provided. The battery pack includes the secondary battery according to the approach.

According to another approach, a vehicle is provided. The vehicle includes the battery pack according to the approach.

According to at least one of the approaches described above, it is possible to provide an electrode that is capable of achieving a secondary battery having a high energy density and excellent cycle life characteristics.

Hereinafter, approaches will be described with reference to the drawings. The same reference signs are applied to common components throughout the approaches and overlapped explanations are thereby omitted. Each drawing is a schematic view for encouraging explanations of the approach and understanding thereof, and thus there are some details in which a shape, a size and a ratio are different from those in a device actually used, but they can be appropriately design-changed considering the following explanations and known technology.

(First approach)

According to a first approach, an electrode is provided. The electrode includes a current collector and an active material-containing layer formed on the current collector and containing active material particles. The active material particles include a monoclinic niobium-titanium composite oxide. A median diameter (D50) calculated from a volume-based frequency distribution chart obtained by a laser diffraction/scattering method for the active material particles is in the range of 1.2 $\mu$m to 4.0 $\mu$m. The frequency distribution chart has two peaks in the range of 0.5 $\mu$m to 8.0 $\mu$m. In the frequency distribution chart, a proportion of an integrated amount of particles having a particle size of 2.0 $\mu$m or less is in the range of 36% to 62% with respect to the entire active material particles on a volume basis.

Conventionally, as an active material powder containing a monoclinic niobium-titanium composite oxide, one having one peak in the particle size distribution chart, that is, a unimodal active material powder has been mainly used. In an electrode produced using a unimodal active material powder, reduction of an average particle size of the active material powder can reduce battery resistance, but increases reactivity between the active material powder and the electrolyte, leading to an increase in undesirable side reactions. On the other hand, increase of the average particle size of the active material powder can reduce the reactivity between the active material powder and the electrolyte, but increases the battery resistance. That is, the input/output characteristics and the storage performance are generally in a trade-off relationship.

In addition, research is under way for practical use of a bimodal form in which a small particle group and a large particle group are mixed as the active material particles. In the active material powder having a bimodal form, small particles easily enter into gaps between large particles, so that, for example, the electrode density can be improved. However, conventionally, in the manufacture of a bimodal niobium-titanium composite oxide powder, a large amount of energy is required to pulverize the particles, due to high hardness of the particles. Fine particles generated in the grinding process tend to be contained, in a large amount, in the active material powder (in particular, the small particle group). As a result, the increase in specific surface area tends to excessively increase the reactivity of the particle surface, leading to poor high-temperature storage performance.

The electrode according to the approach includes an active material-containing layer containing an active material powder having a specific particle size distribution. The specific particle size distribution is, that is, a distribution in which the particle size of the small particle group is relatively large and the particle size of the large particle group is relatively small in the active material powder in a bimodal form. Moreover, the number of active material particles having a fine particle size is not excessively large. Therefore, it is possible to shorten a diffusion distance of lithium ions in a solid while reducing the number of contacts between particles that contribute to an increase in resistance. Therefore, a secondary battery provided with this electrode can exhibit excellent input/output characteristics and high-temperature storage performance.

The active material particles contained in the active material-containing layer included in the electrode according to the approach have the particle size distribution which will be described below. The median diameter (D50) determined from the volume-based frequency distribution chart obtained by the laser diffraction/scattering method is in the range of 1.2 $\mu$m to 4.0 $\mu$m. The method of performing the laser diffraction/scattering method for the active material particles will be described in detail later.

When the median diameter is less than 1.2 $\mu$m, the specific surface area tends to be large. Thus, the reactivity between the active material particles and the electrolyte tends to be excessively increased, leading to poor high-temperature storage performance. Further, in this case, there are many fine particles, and thus the handleability may also be inferior. When the median diameter exceeds 4.0 $\mu$m, the high-temperature storage performance is excellent, but the battery resistance tends to be high due to the presence of many voids between the particles.

In order to improve the rapid charge/discharge performance, it is preferable that the median diameter of the active material particles should be relatively small, for example, in the range of 1.2 $\mu$m to 2.5 $\mu$m. Within this range, the diffusion distance of lithium ions in the crystal can be shortened, so that the rapid charge/discharge performance can be improved. The median diameter of the active material particles is more preferably in the range of 1.4 $\mu$m to 2.0 $\mu$m.

The frequency distribution chart obtained by the laser diffraction/scattering method for the active material particles has two peaks in the range of 0.5 $\mu$m to 8.0 $\mu$m. That is, the particle sizes corresponding to the peak tops of the two peaks are both in the range of 0.5 $\mu$m to 8.0 $\mu$m. When the frequency distribution chart for active material particles has two peaks, it can be said that the active material particles (powder) have a bimodal particle size distribution. The peak in the frequency distribution chart means a part having a region where a differential value at the peak top of the peak is 0, and, with the peak top as the boundary, a differential value for a particle size smaller than that corresponding to the peak top is positive, and a differential value for a particle size larger than that corresponding to the peak top is negative.

Even though the frequency distribution chart has two peaks, if at least one of the two peaks is not in the range of 0.5 $\mu$m to 8.0 $\mu$m, is difficult to achieve both excellent input/output characteristics and high-temperature storage performance. For example, when one of the two peaks has a peak top at a position less than 0.5 $\mu$m, a proportion of fine particles to the entire active material particles is excessively high. In this case, the battery resistance tends to be high because of too large a number of contacts between the particles. Further, because of a large specific surface area, the reactivity with the electrolyte on the surfaces of the active material particles tends to be high, and the high-temperature storage performance tends to be poor. In addition, for example, when one of the two peaks has a peak top at a position exceeding 8.0 $\mu$m, a proportion of particles having a large particle size (also referred to as "coarse particles") with respect to the entire active material particles is excessively high. In this case, many voids are present between the particles, and the number of small active material particles that fill the voids is insufficient. Thus, no good electron conduction network tends to be formed, and the battery resistance tends to be high.

Both of the two peaks appearing in the frequency distribution chart are preferably in the range of 1.0 $\mu$m to 5.0 $\mu$m, more preferably in the range of 1.1 $\mu$m to 4.0 $\mu$m.

In the frequency distribution chart, the proportion of the integrated amount of particles having a particle size of 2.0 $\mu$m or less is in the range of 36% to 62% with respect to the entire active material particles on a volume basis. In other words, a ratio of a particle group having a particle size of 2.0 $\mu$m or less to a particle group having a particle size of more than 2.0 $\mu$m is in the range of 36:64 to 62:38 on a volume basis. When the proportion of the integrated amount of particles having a particle size of 2.0 $\mu$m or less is less than 36%, the electron conductive network tends to decrease and the resistance tends to increase, because of insufficient fine particles that fill the gaps between the coarse particles. On the other hand, when the proportion exceeds 62%, the reactivity between the active material particles and the electrolyte tends to be excessively increased because of too large a proportion of the fine particles. As a result, the high-temperature storage performance is lowered, which is not preferable. The proportion is preferably in the range of 40.0% to 55.0%, more preferably in the range of 42.0% to 50.0%. The proportion may be in the range of 42.5% to 47.0%.

The two peaks in the frequency distribution chart preferably consist of a peak A having a peak top in the range of 0.5 $\mu$m or more and 1.8 $\mu$m or less, and a peak B having a peak top in the range of more than 1.8 $\mu$m and 8.0 $\mu$m or less. The particle size corresponding to a peak top position of the peak A is smaller than the particle size corresponding to a peak top position of the peak B. That is, the peak A is a peak corresponding to a small particle group having a relatively small particle size. The peak B is a peak corresponding to a large particle group having a relatively large particle size.

The peak A preferably has the peak top in the range of 1.0 $\mu$m or more and 1.8 $\mu$m or less. In this case, an average particle size of the small particle group contained in the active material particles is relatively large, and thus the number of contacts between the particles is not too large. Therefore, high input/output characteristics can be obtained. A height (frequency) of the peak A in the frequency distribution chart is not particularly limited, but is, for example, in the range of 2.5% by volume to 4.5% by volume.

The peak B preferably has the peak top in the range of more than 1.8 $\mu$m and 4.5 $\mu$m or less. In this case, an average particle size of the large particle group contained in the active material particles is relatively small, and thus diffusion of lithium ions in a solid in the coarse particles can be generated mainly on the particle surface. As a result, the diffusion distance of lithium ions in the electrode can be shortened on average, so that excellent input/output characteristics can be obtained. A height (frequency) of the peak B in the frequency distribution chart is not particularly limited, but is, for example, in the range of 3.0% by volume to 4.5% by volume.

A difference between a particle size corresponding to the peak top of the peak A and a particle size corresponding to the peak top of the peak B is, for example, in the range of 0.5 $\mu$m or more and 3.0 $\mu$m or less, preferably in the range of 1.0 $\mu$m or more and 2.5 $\mu$m or less. If this difference is excessively small, the average particle size of the small particle group and the average particle size of the large particle group are close to each other, so that the particle size distribution mode of the entire active material particle is similar to a unimodal particle size distribution. When the particle size distribution mode gets close to a unimodal particle size distribution, a diffusion path of lithium ions in a solid due to charge and discharge extends not only in the vicinity of the particle surface but also inside the particles. That is, since the diffusion distance of lithium ions in a solid is long, excellent input/output characteristics may not be obtained.

On the other hand, if the difference in particle size is excessively large, the voids formed between the coarse particles are large, and the average particle size of the fine particles is small, so that the number of fine particles in contact with a certain coarse particle is large. In other words, many fine particles are in contact with and surround a certain coarse particle. When lithium ions diffuse in the coarse particles in such a state, there are many ion conduction paths from the fine particles to the coarse particles and from the coarse particles to the fine particles. Therefore, it is considered that lithium ions in the coarse particles are repeatedly inserted and extracted not only in the vicinity of the surface thereof but also in the crystal structure near the center of the particles. That is, since the diffusion distance of lithium ions as the entire active material particles tends to be long, the input/output characteristics may be inferior.

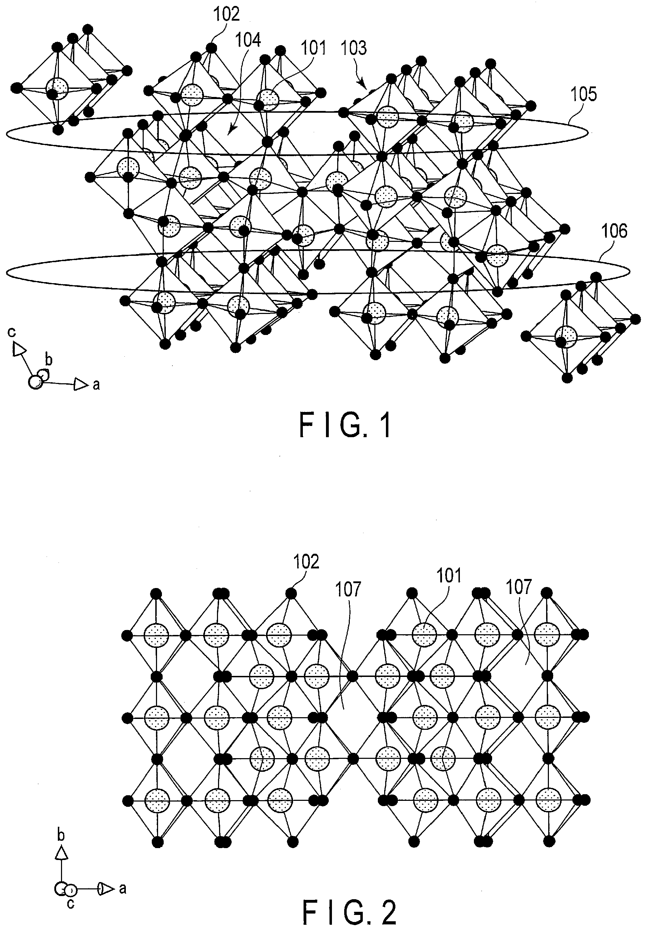

The active material particles contained in the electrode according to the approach include a monoclinic niobium-titanium composite oxide. The monoclinic niobium-titanium composite oxide can achieve excellent energy density in addition to high rate performance. The reason for this will be described by taking $Nb_2TiO_7$, which is a type of monoclinic niobium-titanium composite oxide, as an example with reference to FIGS. 1 and 2.

Schematic views of the crystal structure of monoclinic $Nb_2TiO_7$ are illustrated in FIGS. 1 and 2.

As illustrated in FIG. 1, in the crystal structure of monoclinic $Nb_2TiO_7$, a metal ion 101 and an oxide ion 102 form a skeleton structure section 103. At a position of the metal ion 101, Nb ions and Ti ions are arbitrarily arranged at a ratio of Nb: Ti = 2: 1. Such skeleton structures 103 are alternately arranged three-dimensionally, thereby vacancies 104 are formed among the skeleton structures 103. These vacancies 104 serve as hosts for lithium ions. Lithium ions can be inserted in this crystal structure from 0 moles up to a maximum of 5.0 moles. Therefore, the composition when 0 to 5.0 moles of lithium ions are inserted can be expressed as $Li_xNb_2TiO_7$ ($0 \leq x \leq 5$).

In FIG. 1, regions 105 and 106 are sections having two-dimensional channels in [100] and [010] directions. As illustrated in FIG. 2, the crystal structure of monoclinic $Nb_2TiO_7$ has a vacancy 107 along a [001] direction. This vacancy 107 has a tunnel structure advantageous in conduction of lithium ions and serves as an electrically conductive path in a [001] direction connecting region 105 and region 106. This electrically conductive path makes it possible for the lithium ions to migrate between regions 105 and 106.

When a lithium ion is inserted into the vacancy 104 in the above crystal structure, the metal ion 101, which forms the skeleton, is reduced to a trivalent, thereby maintaining electric neutrality of a crystal. In the niobium-titanium composite oxide, not only a Ti ion is reduced from tetravalent to trivalent, but also an Nb ion is reduced from pentavalent to trivalent. Therefore, the number of reduced valences per active material weight is large. Therefore, the niobium-titanium composite oxide can maintain electric neutrality of the crystal even if many lithium ions are inserted. Thus, energy density is higher in the niobium-titanium composite oxide as compared to that of a compound such as titanium oxide only containing a tetravalent cation. Further, the niobium-titanium composite oxide has a lithium insertion potential of about 1.5 V (vs. Li/Li$^+$). Therefore, an electrode including the niobium-titanium composite oxide as the active material can realize a battery that can stably repeat rapid charging and discharging.

The monoclinic niobium-titanium composite oxide is, for example, at least one selected from the group consisting of a composite oxide represented by General Formula $Li_xTi_{1-y}M1_yNb_{2-z}M2_zO_{7+\delta}$, and a composite oxide represented by General Formula $Li_xTi_{1-y}M3_{y+z}Nb_{2-z}O_{7-\delta}$. Here, M1 is at least one selected from the group consisting of Zr, Si, and Sn. M2 is at least one selected from the group consisting of V, Ta, and Bi. M3 is at least one selected from the group consisting of Mg, Fe, Ni, Co, W, Ta, and Mo. Each subscript in the composition formula satisfies $0 \leq x \leq 5$, $0 \leq y < 1$, $0 \leq z < 2$, and $-0.3 \leq \delta \leq 0.3$.

Specific examples of the monoclinic niobium-titanium composite oxides include $Nb_2TiO_7$, $Nb_2Ti_2O_9$, $Nb_{10}Ti_2O_{29}$,

$Nb_{14}TiO_{37}$, and $Nb_{24}TiO_{62}$. The monoclinic niobium-titanium composite oxide may be a substituted niobium-titanium composite oxide in which at least a part of Nb and/or Ti is substituted with a dopant. Examples of substitution elements are Na, K, Ca, Co, Ni, Si, P, V, Cr, Mo, Ta, Zr, Mn, Fe, Mg, B, Pb, and Al. The substituted niobium-titanium composite oxide may include one kind or two or more kinds of the substitution elements.

The active material particles may include the monoclinic niobium-titanium composite oxide in the form of primary particles, or may include secondary particles formed from agglomerated primary particles. The active material particles include a plurality of primary particles and/or a plurality of secondary particles.

A BET specific surface area of the active material particles is not particularly limited, but is preferably 0.1 $m^2/g$ or more and less than 100 $m^2/g$. When the specific surface area is 0.1 $m^2/g$ or more, a contact area with an electrolytic solution can be secured, good discharge rate characteristics can be easily obtained, and the charging time can be shortened. On the other hand, when the specific surface area is less than 100 $m^2/g$, the reactivity with the electrolytic solution does not become too high, and life characteristics can be improved. Further, when the specific surface area is less than 100 $m^2/g$, coatability of a slurry containing an active material for use in the manufacture of an electrode which will be described later can be improved.

The specific surface area is measured by a method in which molecules having a known adsorption occupation area are adsorbed on the powder particle surface at the temperature of liquid nitrogen and the specific surface area of the sample is obtained from the amount. The BET method based on low-temperature, low-humidity physical adsorption of inert gas is most often used. This BET method is based on the BET theory, which is the most famous theory for calculating the specific surface area, by expanding the Langmuir theory, which is a monolayer adsorption theory, to multi-layer adsorption. The specific surface area determined in this way is referred to as the BET specific surface area.

The active material particles can include other active material particles different from the monoclinic niobium-titanium composite oxide as long as they have the above-described specific particle size distribution. The active material particles include the monoclinic niobium-titanium composite oxide in a proportion of, for example, 70% by mass or more, preferably 90% by mass or more. The active material particles may consist only of a monoclinic niobium-titanium composite oxide.

Examples of such active materials include lithium titanate having a ramsdellite structure (e.g., $Li_{2+y}Ti_3O_7$, $0 \leq y \leq 3$) and lithium titanate having a spinel structure (e.g., $Li_{4+x}Ti_5O_{12}$, $0 \leq x \leq 3$), titanium dioxide ($TiO_2$), niobium pentoxide ($Nb_2O_5$), anatase type titanium dioxide, rutile type titanium dioxide, hollandite type titanium composite oxide, and orthorhombic titanium-containing composite oxide.

Examples of the orthorhombic titanium-containing composite oxide include a compound represented by $Li_{2+a}M(I)_{2-b}Ti_{6-c}M(II)_dO_{14+\sigma}$. Here, M(I) is at least one selected from the group consisting of Sr, Ba, Ca, Mg, Na, Cs, Rb and K. M(II) is at least one selected from the group consisting of Zr, Sn, V, Nb, Ta, Mo, W, Y, Fe, Co, Cr, Mn, Ni and Al. The respective subscripts in the composition formula are specified as follows: $0 \leq a \leq 6$, $0 \leq b < 2$, $0 \leq c < 6$, $0 \leq d < 6$, and $-0.5 \leq \sigma \leq 0.5$. Specific examples of the orthorhombic titanium-containing composite oxide include $Li_{2+a}Na_2Ti_6O_{14}$ ($0 \leq a \leq 6$).

Hereinafter, each element constituting the electrode according to the approach will be described. The electrode according to the approach may be a negative electrode or a positive electrode. The electrode according to the approach is, for example, a battery electrode or a secondary battery electrode.

The electrode according to the approach can include a current collector and an active material-containing layer. The active material-containing layer can be formed on one side or both sides of the current collector. The active material-containing layer can contain the active material particles according to the approach, and, optionally, an electro-conductive agent and a binder. The active material-containing layer provided in the electrode according to the present approach can be produced by using an electrode-producing slurry according to a second approach which will be described later.

The electro-conductive agent is blended in order to enhance the current collecting performance and suppress the contact resistance between the active material and the current collector. Examples of electro-conductive agents include carbonaceous matters such as vapor grown carbon fiber (VGCF), carbon black such as acetylene black, graphite, and carbon nanofibers. One of these matters may be used as the electro-conductive agent, or two or more of them may be used as the electro-conductive agent in combination. Alternatively, instead of using the electro-conductive agent, a carbon coat or an electronically conductive inorganic material coat may be applied to the surfaces of the active material particles.

The active material particles according to the approach may not have a carbon coat on the surfaces thereof. In this case, since the process of providing a carbon coat on the surfaces of the active material particles can be omitted, the production of the active material particles can be facilitated and the manufacture cost can be reduced.

The binder is blended in order to fill the gaps between the dispersed active materials and to bind the active material and the negative electrode current collector. Examples of the binder include polytetrafluoroethylene (PTFE), polyvinylidene fluoride (PVdF), fluororubber, styrene butadiene rubber, polyacrylic acid compound, imide compound, carboxymethyl cellulose (CMC), and salts of the CMC. One of these materials may be used as the binder, or two or more of these materials may be combined and used as the binder.

The mixing ratio of the active material particles, the conductive agent, and the binder in the active material-containing layer can be appropriately changed according to the use of the electrode. For example, the mixing ratio is as follows. The active material-containing layer contains active material particles, a conductive agent, and a binder in a proportion of preferably in ranges from 68% by mass to 96% by mass, from 2% by mass to 30% by mass, and from 2% by mass to 30% by mass, respectively. By setting the amount of the conductive agent to 2% by mass or more, the current collecting performance of the active material-containing layer can be improved. Further, by setting the amount of the binder to 2% by mass or more, the binding property between the active material-containing layer and the current collector becomes sufficient, and the excellent cycle performance can be expected. On the other hand, the conductive agent and the binder are each preferably 30% by mass or less in order to increase the capacity.

As the current collector, a material that is electrochemically stable at the potential at which lithium (Li) is inserted into and extracted from the active material is used. For example, when the electrode according to the approach functions as a negative electrode, the current collector is preferably made from an aluminum alloy containing one or more elements selected from copper, nickel, stainless steel or aluminum, or Mg, Ti, Zn, Mn, Fe, Cu, and Si. The thickness of the current collector is preferably within a range from 5 $\mu$m to 20 $\mu$m. The current collector having such a thickness can balance the strength and weight reduction of the electrode.

In addition, the current collector can include a portion where the active material-containing layer is not formed on the surface thereof. This portion can act as a current collecting tab.

An electrode density (excluding the current collector) is, for example, in the range of 2.2g/cm$^3$ to 2.9g/cm$^3$, preferably in the range of 2.3/cm$^3$ to 2.8g/cm$^3$. If the electrode density is excessively low, the entire active material particles contained in the active material-containing layer are unlikely to be uniformly deteriorated, due to insufficient electron conductive path. Therefore, a capacity retention rate tends to decrease when a charge/discharge cycle is repeated. If the electrode density is excessively high, electrolyte impregnation properties are poor. Therefore, a capacity retention rate tends to decrease when a charge/discharge cycle is repeated.

<Measurement of particle size distribution by laser diffraction scattering method>

The particle size distribution chart of the active material-containing layer included in the electrode according to the approach can be obtained by performing measurement according to the following procedure.

In a case where the electrode is incorporated in the battery as a negative electrode, the battery is first discharged and then the negative electrode is removed from the battery. The operation of removing the negative electrode is performed in an inert atmosphere such as an argon atmosphere. Thereafter, the negative electrode is immersed in ethyl methyl carbonate to remove the Li salt and then dried. For the dried electrode, only the negative electrode active material-containing layer is peeled off from the current collector with a spatula, and the peeled negative electrode active material-containing layer is dispersed in a solvent such as N-methyl-2-pyrrolidone (NMP). Thereafter, the centrifuge is used to separate the active material particles from the conductive agent and the binder.

The separated active material particles are dispersed in N-methyl-2-pyrrolidone (NMP) solvent and subjected to ultrasonic treatment to obtain a dispersion solution as a sample for particle size distribution measurement. With respect to this dispersion solution, the particle size distribution of the constituent particles is measured using a laser diffraction type distribution measuring apparatus. As a measuring apparatus, for example, Microtrac MT3100II manufactured by MicrotracBEL Corp. can be used.

An ultrasonic treatment for obtaining the dispersion solution is performed by a sample supply system attached to the laser diffraction type distribution measuring apparatus. The ultrasonic treatment is carried out for 60 seconds at a power of 30 W.

By the above measurement, a particle size distribution (frequency distribution) chart on a volume basis can be obtained for the active material particles. In the frequency distribution chart, the horizontal axis shows the particle size [$\mu$m] and the vertical axis shows the frequency [%]. From the obtained particle size distribution chart, a median diameter D50 of the active material particles can be determined. In addition, a particle size corresponding to a peak position of a peak appearing in the particle size distribution chart and its frequency will be revealed. In addition, it is possible to calculate a proportion of an integrated amount of particles having a particle size of 2.0 $\mu$m or less with respect to the entire active material particles on a volume basis.

It is also possible to obtain a graph of a differential value corresponding to the obtained frequency distribution chart by using software attached to the above-described particle size distribution measuring device.

<Powder X-ray diffraction>

The crystal structure of the niobium-titanium composite oxide in the active material particles can be confirmed by powder X-ray diffraction (XRD). As an apparatus for powder X-ray diffraction measurement, for example, SmartLab manufactured by Rigaku Corporation or an apparatus having an equivalent function is used. The measurement conditions are as follows:

X-ray source: Cu target
Output: 45 kV 200 mA
Solar slit: 5° for both incident and reception
Step width (2θ): 0.02 deg
Scan speed: 20 deg/min
Semiconductor detector: D/teX Ultra 250
Sample plate holder: Flat glass sample plate holder (thickness 0.5 mm)
Measurement range: $5° \leq 2θ \leq 90°$

According to a first approach, an electrode is provided. The electrode includes a current collector and an active material-containing layer formed on the current collector and containing active material particles. The active material particles include a monoclinic niobium-titanium composite oxide. A median diameter (D50) calculated from a volume-based frequency distribution chart obtained by a laser diffraction/scattering method for the active material particles is in the range of 1.2 μm to 4.0 μm. The frequency distribution chart has two peaks in the range of 0.5 μm to 8.0 μm. In the frequency distribution chart, a proportion of an integrated amount of particles having a particle size of 2.0 μm or less is in the range of 36% to 62% with respect to the entire active material particles on a volume basis.

According to the electrode according to the first approach, it is possible to realize a secondary battery having excellent input/output characteristics and high-temperature storage performance.

(Second approach)

According to a second approach, a method for manufacturing an electrode-producing slurry is provided. The electrode according to the first approach can be produced, for example, by applying the electrode-producing slurry according to the second approach to at least one surface of a current collector, followed by pressing and drying.

The electrode-producing slurry can be produced by, for example, the following method.

First, a monoclinic niobium-titanium composite oxide powder is prepared. A method for preparing a monoclinic niobium-titanium composite oxide powder is not particularly limited, and, for example, the monoclinic niobium-titanium composite oxide powder can be prepared through synthesis by a solid-phase synthesis method, a hydrothermal synthesis method, or the like. A median diameter of the obtained monoclinic niobium-titanium composite oxide powder is, for example, in the range of 1.5 μm to 6.0 μm, preferably in the range of 2.0 μm to 4.0 μm. The median diameter of the monoclinic niobium-titanium composite oxide powder can be measured by the laser diffraction/scattering method described above.

Here, as an example, a method of synthesizing a monoclinic niobium-titanium composite oxide powder by a solid-phase synthesis method will be described. First, starting materials are mixed. As starting materials for the niobium-titanium composite oxide, oxides or salts containing Ti or Nb are used. The salts used as the starting materials are preferably salts, such as a carbonate and a nitrate, which decompose at a relatively low temperature to form oxides. Median diameters of these starting materials are preferably in the range of 0.1 μm to 10 μm, and more preferably in the range of 0.1 μm to 5 μm. This is because if they are smaller than 0.1 μm, the starting materials tend to fly into the atmosphere during mixing and to cause a composition shift, and if they are larger than 10 μm, an unreacted product is generated.

When mixing the starting materials, they are mixed in a molar ratio so that a Nb source and a Ti source have the desired composition. The mixed starting materials are subjected to temporary firing at a temperature in the range of 500°C to 1000°C for about 2 hours to 10 hours. The powder after the temporary firing may be ground with a bead mill or the like. After that, the obtained powder is subjected to main firing. This main firing is, for example, divided into two or more firings, and carried out at a temperature of 800°C to 1450°C over a total of 10 to 40 hours. After the main firing, the obtained powder is subjected to a grinding step to obtain a monoclinic niobium-titanium composite oxide powder.

The grinding step can be performed using, for example, a bead mill, a roller compactor, a hammer mill, or the like. The grinding step is preferably performed so that the median diameter of the monoclinic niobium-titanium composite oxide powder obtained after grinding is within the above range, that is, within the range of 1.5 μm to 6.0 μm. As an example of conditions for grinding the powder using a bead mill, for example, a grinding medium having a diameter of 1 mm to 10 mm can be used, a rotation speed can be set to 100 rpm to 1000 rpm, and a grinding time can be set to 10 minutes to 30 minutes. In addition, rpm (rotations per minute) means a rotation speed in one minute.

Next, the obtained monoclinic niobium-titanium composite oxide powder is mixed with an electro-conductive agent, a binder and an appropriate solvent to obtain a first slurry. A mixing proportion of these materials is preferably the mixing proportion described in the first approach. That is, blending proportions of the monoclinic niobium-titanium composite oxide powder, the electro-conductive agent and the binder are preferably 68% by mass or more and 96% by mass or less, 2% by mass or more and 30% by mass or less, and 2% by mass or more and 30% by mass, respectively. An amount of the solvent to be mixed is, for example, 100% by mass or more and 300% by mass or less with respect to the total mass of the monoclinic niobium-titanium composite oxide powder, the electro-conductive agent and the binder.

As the electro-conductive agent and the binder, the electro-conductive agent and the binder described in the first approach can be used respectively. A median diameter of the electro-conductive agent used is, for example, in the range of 0.1 $\mu$m to 10 $\mu$m. A median diameter of the binder used is, for example, in the range of 0.1 $\mu$m to 10 $\mu$m.

As the solvent, for example, at least one selected from the group consisting of water, N-methyl-2-pyrrolidone (NMP), ethanol and isopropanol can be used.

The first slurry is then divided into two batches. One of the two divided batches is referred to as a second slurry. The other of the two divided batches is referred to as a third slurry. This division is preferably performed so that, for example, the second slurry and the third slurry have the same amount of each other. Subsequently, at least the second slurry is ground and mixed so that the median diameters of various particles contained in the second slurry are smaller than the median diameters of various particles contained in the third slurry. Preferably, the third slurry is also ground and mixed. In this way, the two types of slurries having different median diameters are produced, and then an electrode is produced using a slurry in which these slurries are mixed at an appropriate mass ratio, thereby making it possible to obtain an electrode which includes an active material-containing layer containing active material particles having a bimodal particle mode and having a predetermined D50, in which a proportion of an integrated amount of particles having a particle size of 2 $\mu$m or less is within a predetermined range.

The second slurry is ground and mixed so that the median diameter of the obtained slurry (referred to as a fourth slurry) is, for example, in the range of 1.1 $\mu$m to 1.8 $\mu$m. The second slurry is preferably ground and mixed so that the median diameter of the fourth slurry is within the range of 1.3 $\mu$m to 1.6 $\mu$m. Specifically, the second slurry is ground and mixed by, for example, a bead mill using a grinding medium having a diameter of 0.05 mm to 5.0 mm. The second slurry may be ground and mixed by a homogenizer instead of a bead mill.

Further, the second slurry is preferably ground and mixed according to the following second condition. Specifically, the second condition is a condition in which the rotation speed of the bead mill is set within the range of 1000 rpm to 2500 rpm and the grinding time is set within the range of 10 minutes to 40 minutes. The median diameters of various particles contained in the fourth slurry can be measured by the laser diffraction/scattering method described above.

The third slurry is ground and mixed so that the median diameter of the obtained slurry (referred to as a fifth slurry) is, for example, in the range of 3.0 $\mu$m to 4.0 $\mu$m. The third slurry is preferably ground and mixed so that the median diameter of the fifth slurry is within the range of 3.1 $\mu$m to 3.6 $\mu$m. Specifically, the third slurry is ground and mixed by, for example, a bead mill using a grinding medium having a diameter of 0.05 mm to 5.0 mm. The third slurry may be ground and mixed by a homogenizer instead of a bead mill.

Further, the third slurry is preferably ground and mixed according to the following third condition. Specifically, the third condition is a condition in which the rotation speed of the bead mill is set within the range of 200 rpm to 600 rpm and the grinding time is set within the range of 10 minutes to 40 minutes. The median diameters of various particles contained in the fifth slurry can be measured by the laser diffraction/scattering method described above.

As the grinding medium used in the bead mill at each stage, for example, zirconia beads, alumina beads, soda glass beads and the like can be used. A volume filling rate of the ground media to be put into the bead mill is, for example, in the range of 70% to 85%.

By increasing the median diameter of the fourth slurry, the particle size of the peak A tends to be increased for the active material particles contained in the target active material-containing layer. On the other hand, by reducing the median diameter of the fourth slurry, the particle size of the peak A tends to be reduced for the active material particles contained in the target active material-containing layer. Further, by increasing the median diameter of the fifth slurry, the particle size of the peak B tends to be increased for the active material particles contained in the target active material-containing layer. On the other hand, by reducing the median diameter of the fifth slurry, the particle size of the peak B tends to be reduced for the active material particles contained in the target active material-containing layer.

Then, by mixing the obtained fourth slurry and fifth slurry, an electrode-producing slurry as a sixth slurry can be obtained. A mixing ratio between the fourth slurry and the fifth slurry is not particularly limited, and, is, for example, in the range of 80:20 to 20:80, preferably in the range of 60:40 to 40:60. The mixing ratio may be in the range of 45:55 to 55:45 and may be 50:50.

The particle size distribution of the active material particles contained in the electrode-producing slurry has a great influence on the frequency distribution chart of the active material particles contained in the active material-containing layer produced by using the electrode-producing slurry. Therefore, when mixing the fourth slurry and the fifth slurry, if the mass proportion of the fourth slurry to the electrode-producing slurry is too small, the total amount of particles for developing the peak A may be insufficient. On the other hand, if the mass proportion of the fifth slurry to the electrode-producing slurry is too small, the total amount of particles for developing the peak B may be insufficient.

According to the second approach, a method for manufacturing an electrode-producing slurry is provided. The method for manufacturing an electrode-producing slurry includes: a step of obtaining a monoclinic niobium-titanium composite oxide powder having a median diameter in the range of 1.5 μm to 6.0 μm in a frequency distribution chart obtained by a laser diffraction/scattering method; a step of mixing the monoclinic niobium-titanium composite oxide powder, an electro-conductive agent, a binder and a solvent to obtain a first slurry; a step of dividing the first slurry into two to obtain a second slurry and a third slurry; a step of pulverizing and mixing the second slurry to prepare a fourth slurry having a median diameter in the range of 1.1 μm to 1.8 μm in the frequency distribution chart obtained by the laser diffraction/scattering method; a step of pulverizing and mixing the third slurry to obtain a fifth slurry having a median diameter in the range of 3.0 μm to 4.0 μm in the frequency distribution chart obtained by the laser diffraction/scattering method; and

a step of mixing the fourth slurry and the fifth slurry at a mass ratio of 80:20 to 20:80 to obtain a sixth slurry.

By producing an electrode using the electrode-producing slurry according to the present approach, the electrode described in the first approach can be produced. That is, an electrode which includes an active material-containing layer containing active material particles having a bimodal particle mode and having a predetermined D50, in which a proportion of an integrated amount of particles having a particle size of 2 μm or less is within a predetermined range.

(Third approach)

According to the third approach, a method for manufacturing an electrode is provided. The method for manufacturing an electrode includes: a step of applying an electrode-producing slurry obtained by the manufacture method according to the second approach to at least one surface of a current collector to obtain a stack. As the current collector, the current collector described in the first approach can be used.

A method of applying the electrode-producing slurry to at least one surface of the current collector is not particularly limited, and can be appropriately selected from, for example, a die coater method, a comma coater method, a reverse roll coater method, a gravure method, a gravure offset method, a kiss coat method, and the like.

The method for manufacturing an electrode may further include a pressing step and a drying step for the stack. When this stack is subjected to the pressing step and the drying step, an active material-containing layer made of the electrode-producing slurry is formed. In this way, the electrode described in the first approach can be obtained.

The pressing step on the stack is performed at a pressure of 10 t/10cm to 30 t/10cm and a stretching speed of 2 m/min to 200 m/min using, for example, a roll pressing device.

The drying step is performed, for example, after the pressing step. The drying step can be carried out for 2 hours to 80 hours in a temperature environment of, for example, 45°C to 120°C.

(Fourth approach)

According to the fourth approach, a secondary battery including a negative electrode, a positive electrode, and an electrolyte is provided. The secondary battery includes the electrode according to the first approach as the negative electrode.

The secondary battery additionally can be equipped with a separator disposed between the positive electrode and the negative electrode. The negative electrode, the positive electrode, and the separator can constitute an electrode group. The electrolyte can be held in the electrode group.

The secondary battery additionally can be equipped with a container member that houses the electrode group and the electrolyte.

Furthermore, the secondary battery additionally can be equipped with a negative electrode terminal electrically connected to the negative electrode and a positive electrode terminal electrically connected to the positive electrode.

The secondary battery can be, for example, a lithium secondary battery. The secondary battery may be a nonaqueous electrolyte secondary battery including a nonaqueous electrolyte.

Hereinafter, the negative electrode, the positive electrode, the electrolyte, the separator, the container member, the negative electrode terminal, and the positive electrode terminal will be described in detail.

(1) Negative electrode

A negative electrode included in a secondary battery according to a fourth approach may be, for example, the electrode described in the first approach. An active material-containing layer contained in the electrode may be a negative electrode active material-containing layer. Active material particles contained in the electrode can be negative electrode active material particles.

The negative electrode can be manufactured, for example, by the same method as the method for manufacturing an electrode according to the third approach.

(2) Positive Electrode

The positive electrode may include a positive electrode current collector and a positive electrode active material-containing layer. The positive electrode active material-containing layer may be formed on one surface or both of reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one kind of compound as the positive electrode active material, or include two or more kinds of compounds in combination. Examples of the oxide and sulfide include compounds capable of having Li and Li ions be inserted and extracted.

Examples of such compounds include manganese dioxides ($MnO_2$), iron oxides, copper oxides, nickel oxides, lithium manganese composite oxides (e.g., $Li_xMn_2O_4$ or $Li_xMnO_2$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese cobalt composite oxides (e.g., $Li_xMn_yCo_{1-y}O_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium phosphates having an olivine structure (e.g., $Li_xFePO_4$; $0 < x \leq 1$, $Li_xFe_{1-y}Mn_yPO_4$; $0 < x \leq 1$, $0 < y < 1$, and $Li_xCoPO_4$; $0 < x \leq 1$), iron sulfates $[Fe_2(SO_4)_3]$, vanadium oxides (e.g., $V_2O_5$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$).

Among the above, examples of compounds more preferable as the positive electrode active material include lithium manganese composite oxides having a spinel structure (e.g., $Li_xMn_2O_4$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium manganese cobalt composite oxides (e.g., $Li_xMn_yCo_{1-y}O_2$; $0 < x \leq 1$, $0 < y < 1$), lithium iron phosphates (e.g., $Li_xFePO_4$; $0 < x \leq 1$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$). The positive electrode potential can be made high by using these positive electrode active materials.

When a room temperature molten salt is used as the electrolyte of the battery, it is preferable to use a positive electrode active material including lithium iron phosphate, $Li_xVPO_4F$ ($0 \leq x \leq 1$), lithium manganese composite oxide, lithium nickel composite oxide, lithium nickel cobalt composite oxide, or a mixture thereof. Since these compounds have low reactivity with room temperature molten salts, cycle life can be improved. Details regarding the room temperature molten salt are described later.

The primary particle size of the positive electrode active material is preferably from 100 nm to 1 $\mu$m. The positive electrode active material having a primary particle size of 100 nm or more is easy to handle during industrial production. In the positive electrode active material having a primary particle size of 1 $\mu$m or less, diffusion of lithium ions within solid can proceed smoothly.

The specific surface area of the positive electrode active material is preferably from 0.1 $m^2$/g to 10 $m^2$/g. The positive electrode active material having a specific surface area of 0.1 $m^2$/g or more can secure sufficient sites for inserting and extracting Li ions. The positive electrode active material having a specific surface area of 10 $m^2$/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluorine rubber, polyacrylate compounds, imide compounds, carboxymethyl cellulose (CMC), and salts of CMC. One of these may be used as the binder, or two or more may be used in combination as the binder.

The electro-conductive agent is blended in order to enhance the current collecting performance and suppress the contact resistance between the positive electrode active material and the positive electrode current collector. Examples of electro-conductive agents include carbonaceous matters such as vapor grown carbon fiber (VGCF), carbon black such as acetylene black, graphite, and carbon nanofibers. One of these matters may be used as the electro-conductive agent, or two or more of them may be used as the electro-conductive agent in combination. Moreover, the electro-conductive agent can be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, the decomposition of an electrolyte can be reduced during storage under high temperatures.

The positive electrode current collector is preferably an aluminum foil or an aluminum alloy foil containing one or more elements selected from Mg, Ti, Zn, Ni, Cr, Mn, Fe, Cu, and Si.

The thickness of the aluminum foil or aluminum alloy foil is preferably within a range from 5 $\mu$m to 20 $\mu$m, and is more preferably 15 $\mu$m or less. The purity of the aluminum foil is preferably 99% by mass or more. The content of transition metals such as iron, copper, nickel, and chromium contained in the aluminum foil or aluminum alloy foil is preferably 1% by mass or less.

In addition, the positive electrode current collector can include a portion where the positive electrode active material-containing layer is not formed on the surface thereof. This portion can serve as a positive electrode tab.

The positive electrode can be produced, for example, by the following method. First, an active material, a conductive agent, and a binder are suspended in a solvent to prepare a slurry. This slurry is applied to one side or both sides of the current collector. Next, the applied slurry is dried to obtain a laminate of the active material-containing layer and the current collector. Thereafter, the laminate is pressed. The positive electrode is thus produced.

Alternatively, the positive electrode may be produced by the following method. First, an active material, a conductive agent, and a binder are mixed to obtain a mixture. The mixture is then formed into pellets. Subsequently, these pellets can be arranged on the current collector to obtain a positive electrode.

(3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), and lithium bistrifluoromethylsulfonylimide [$LiN(CF_3SO_2)_2$], and mixtures thereof. The electrolyte salt is preferably resistant to oxidation even at a high potential, and most preferably $LiPF_6$.

Examples of the organic solvent include cyclic carbonates such as propylene carbonate (PC), ethylene carbonate (EC), or vinylene carbonate (VC); linear carbonates such as diethyl carbonate (DEC), dimethyl carbonate (DMC), or methyl ethyl carbonate (MEC); cyclic ethers such as tetrahydrofuran (THF), 2-methyl tetrahydrofuran (2-MeTHF), or dioxolane (DOX); linear ethers such as dimethoxy ethane (DME) or diethoxy ethane (DEE); $\gamma$-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, a room temperature molten salt (ionic melt) including lithium ions, a polymer solid electrolyte, an inorganic solid electrolyte, or the like may be used as the nonaqueous electrolyte.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity.

The electrolyte may also be an aqueous electrolyte containing water.

The aqueous electrolyte includes an aqueous solvent and an electrolyte salt. The aqueous electrolyte is liquid, for example. A liquid aqueous electrolyte is an aqueous solution prepared by dissolving an electrolyte salt as the solute in an aqueous solvent. The aqueous solvent is a solvent containing 50% or more water by volume, for example. The aqueous solvent may also be pure water.

The aqueous electrolyte may also be an aqueous gel composite electrolyte containing an aqueous electrolytic solution and a polymer material. The polymer material may be, for example, polyvinylidene fluoride (PVDF), polyacrylonitrile (PAN), or polyethylene oxide (PEO).

The aqueous electrolyte preferably contains 1 mol or greater of aqueous solvent per 1 mol of the salt as the solute. In an even more preferably aspect, the aqueous electrolyte contains 3.5 mol or greater of aqueous solvent per 1 mol of the salt as the solute.

That the aqueous electrolyte contains water can be confirmed by gas chromatography - mass spectrometry (GC-MS) measurement. Also, the salt concentration and the amount of water contained in the aqueous electrolyte can be computed by measurement using inductively coupled plasma (ICP) emission spectroscopy or the like, for example. By measuring out a prescribed amount of the aqueous electrolyte and computing the contained salt concentration, the molar concentration (mol/L) can be computed. Also, by measuring the specific gravity of the aqueous electrolyte, the number of moles of the solute and the solvent can be computed.

The aqueous electrolyte is prepared by dissolving the electrolyte salt into the aqueous solvent at a concentration from 1 to 12 mol/L for example.

To suppress electrolysis of the aqueous electrolyte, LiOH, $Li_2SO_4$, or the like can be added to adjust the pH. The pH is preferably from 3 to 13, and more preferably from 4 to 12.

(4) Separator

The separator is formed of, for example, a porous film containing polyethylene (polyethylene; PE), polypropylene (polypropylene; PP), cellulose, or polyvinylidene fluoride (PVdF), or a synthetic resin nonwoven fabric. From the viewpoint of safety, it is preferable to use a porous film formed from polyethylene or polypropylene. This is because these porous films can be melted at a predetermined temperature to interrupt the current.

As a separator, a solid electrolyte layer containing solid electrolyte particles can also be used. The solid electrolyte layer may contain one kind of solid electrolyte particles, or may contain a plurality of kinds of solid electrolyte particles. The solid electrolyte layer may be a solid electrolyte composite film containing solid electrolyte particles. The solid electrolyte composite film is, for example, formed by molding solid electrolyte particles into a film shape using a polymer material. The solid electrolyte layer may contain at least one selected from the group consisting of plasticizers and electrolyte salts. When the solid electrolyte layer contains an electrolyte salt, for example, the alkali metal ion conductivity of the solid electrolyte layer can be further enhanced.

Examples of the polymer material include polyether-based, polyester-based, polyamine-based, polyethylene-based, silicone-based and polysulfide-based polymer materials.

As the solid electrolyte, it is preferable to use an inorganic solid electrolyte. Examples of the inorganic solid electrolyte include an oxide-based solid electrolyte and a sulfide-based solid electrolyte. As the oxide-based solid electrolyte, it is preferable to use a lithium phosphate solid electrolyte having a NASICON type structure and represented by the general formula $LiM_2(PO_4)_3$. M in the above general formula is preferably at least one kind of element selected from the group consisting of titanium (Ti), germanium (Ge), strontium (Sr), zirconium (Zr), tin (Sn), and aluminum (Al). It is more preferable that the element M contain any one element of Ge, Zr and Ti, and Al.

Specific examples of the lithium phosphate solid electrolyte having a NASICON type structure can include LATP($Li_{1+x}Al_xTi_{2-x}(PO_4)_3$), $Li_{1+x}Al_xGe_{2-x}(PO_4)_3$, and $Li_{1+x}Al_xZr_{2-x}(PO_4)_3$. In the above formulae, x is in the range of $0 < x \leq 5$, preferably in the range of $0.1 \leq x \leq 0.5$. It is preferable to use LATP as the solid electrolyte. LATP has excellent water resistance and is less likely to cause hydrolysis in a secondary battery.

Further, as the oxide-based solid electrolyte, amorphous LIPON ($Li_{2.9}PO_{3.3}N_{0.46}$) or LLZ ($Li_7La_3Zr_2O_{12}$) having a garnet-type structure may be used.

(5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal case is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), square, cylinder, coin, or button-shaped. The container member may be appropriately selected depending on battery size and use of the battery.

(6) Negative electrode Terminal

The negative electrode terminal may be made of a material that is electrochemically stable at the potential at which Li is inserted into and extracted from the above-described negative electrode active material, and has electrical conductivity. Specific examples of the material for the negative electrode terminal include copper, nickel, stainless steel, aluminum, and aluminum alloy containing at least one element selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance with the negative electrode current collector.

(7) Positive Electrode Terminal

The positive electrode terminal may be made of, for example, a material that is electrically stable in the potential range of 3 V to 5 V (vs. Li/Li$^+$) relative to the redox potential of lithium, and has electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance with the positive electrode current collector.

Next, the secondary battery according to the approach will be more specifically described with reference to the drawings.

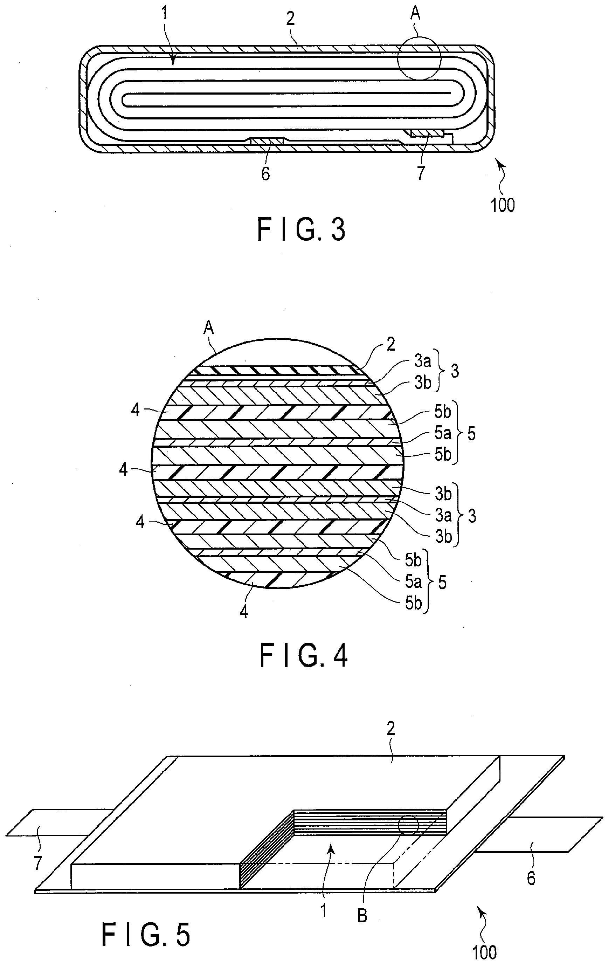

FIG. 3 is a cross-sectional view schematically showing an example of a secondary battery according to the approach. FIG. 4 is an enlarged cross-sectional view of section A of the secondary battery shown in FIG. 3.

The secondary battery 100 shown in FIGS. 3 and 4 includes a bag-shaped container member 2 shown in FIG. 3, an electrode group 1 shown in FIGS. 3 and 4, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 3, the electrode group 1 is a wound electrode group in a flat form. The wound electrode group 1 in a flat form includes a negative electrode 3, a separator 4, and a positive electrode 5, as shown in FIG. 4. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 4. For the other portions of the negative electrode 3, negative electrode active material-containing layers 3b are formed on both of reverse surfaces of the negative electrode current collector 3a.

The positive electrode 5 includes a positive electrode current collector 5a and positive electrode active material-containing layers 5b formed on both of reverse surfaces of the positive electrode current collector 5a.

As shown in FIG. 3, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening of the bag-shaped container member 2 is sealed by heat-sealing the resin layer.

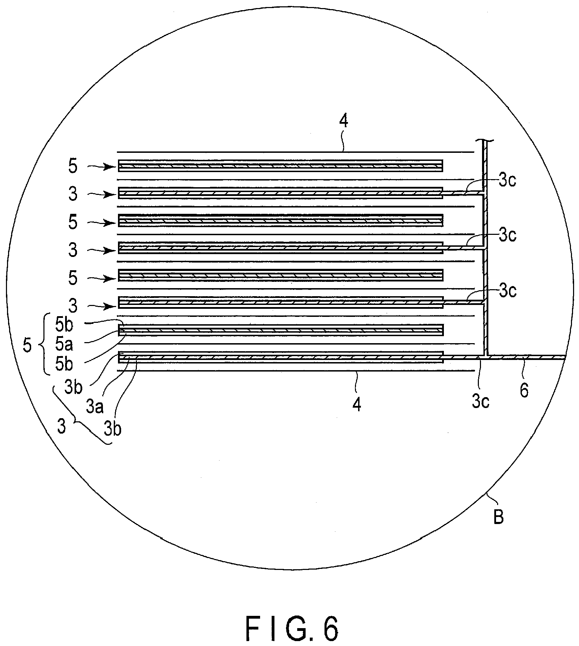

The secondary battery according to the third approach is not limited to the secondary battery of the structure shown in FIGS. 3 and 4, and may be, for example, a battery of a structure as shown in FIGS. 5 and 6.

FIG. 5 is a partially cut-out perspective view schematically showing another example of a secondary battery according to the third approach. FIG. 6 is an enlarged cross-sectional view of section B of the secondary battery shown in FIG. 5.

The secondary battery 100 shown in FIGS. 5 and 6 includes an electrode group 1 shown in FIGS. 5 and 6, a container member 2 shown in FIG. 5, and an electrolyte, which is not shown. The electrode group 1 and the electrolyte are housed in the container member 2. The electrolyte is held in the electrode group 1.

The container member 2 is made of a laminate film including two resin layers and a metal layer sandwiched between the resin layers.

As shown in FIG. 6, the electrode group 1 is a stacked electrode group. The stacked electrode group 1 has a structure in which and negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces of the positive electrode current collector 5a.

The negative electrode current collector 3a of each of the negative electrodes 3 includes at one end, a portion 3c where the negative electrode active material-containing layer 3b is not supported on either surface. This portion 3c serves as a negative electrode tab. As shown in FIG. 6, the portions 3c serving as the negative electrode tabs do not overlap the positive electrodes 5. The plural negative electrode tabs (portions 3c) are electrically connected to the strip-shaped negative electrode terminal 6. A tip of the strip-shaped negative electrode terminal 6 is drawn to the outside from the container member 2.

Although not shown, the positive electrode current collector 5a of each of the positive electrodes 5 includes at one end, a portion where the positive electrode active material-containing layer 5b is not supported on either surface. This portion serves as a positive electrode tab. Like the negative electrode tabs (portion 3c), the positive electrode tabs do not overlap the negative electrodes 3. Further, the positive electrode tabs are located on the opposite side of the electrode group 1 with respect to the negative electrode tabs (portion 3c). The positive electrode tabs are electrically connected to the strip-shaped positive electrode terminal 7. A tip of the strip-shaped positive electrode terminal 7 is located on the opposite side relative to the negative electrode terminal 6 and drawn to the outside from the container member 2.

The secondary battery according to the fourth approach includes the electrode according to the first approach. Therefore, the secondary battery according to the fourth approach can achieve excellent input/output characteristics and high-temperature storage performance.

(Fifth approach)

According to a fifth approach, a battery module is provided. The battery module according to the fifth approach includes plural secondary batteries according to the fourth approach.

In the battery module according to the approach, each of the single batteries may be arranged electrically connected in series, in parallel, or in a combination of in-series connection and in-parallel connection.

An example of the battery module according to the approach will be described next with reference to the drawings.

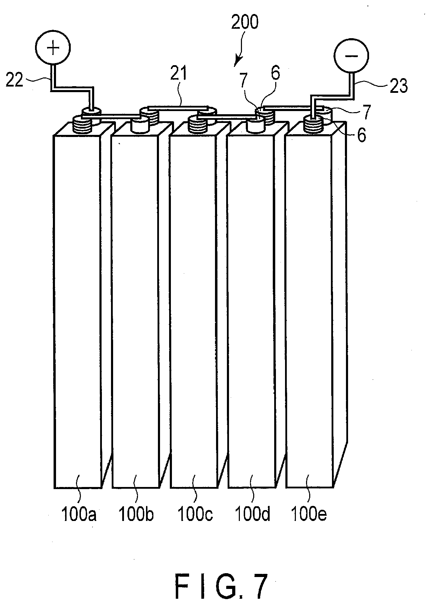

FIG. 7 is a perspective view schematically showing an example of the battery module according to the fourth approach. A battery module 200 shown in FIG. 7 includes five single-batteries 100a to 100e, four bus bars 21, a positive electrode-side lead 22, and a negative electrode-side lead 23. Each of the five single-batteries 100a to 100e is a secondary battery according to the fourth approach.

The bus bars 21 connects a negative electrode terminal 6 of a single unit cell 100a to a positive electrode terminal 7 of an adjacently positioned unit cell 100b. In this way, the five unit cells 100a to 100e are connected in series by the four bus bars 21. That is, the battery module 200 shown in FIG. 7 is a battery module of five in-series connection. Although an example is not illustrated, in a battery module containing a plurality of unit cells electrically connected in parallel, the plurality of unit cells may be electrically connected by connecting the plurality of negative electrode terminals to each other with busbars and also connecting the plurality of positive electrode terminals to each other with busbars, for example.

The positive electrode terminal 7 of at least one battery among the five unit cells 100a to 100e is electrically connected to a positive electrode lead 22 for external connection. Also, the negative electrode terminal 6 of at least one battery among the five unit cells 100a to 100e is electrically connected to a negative electrode lead 23 for external connection.

A battery module according to a fifth approach includes the secondary battery according to the fourth approach. Therefore, the battery module according to the fifth approach can achieve excellent input/output characteristics and high-temperature storage performance.

(Sixth approach)

According to the sixth approach, a battery pack is provided. The battery pack includes the battery module according to the fifth approach. The battery pack may also be equipped with a single secondary battery according to the fourth approach instead of the battery module according to the fifth approach.

The battery pack according to the approach may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack according to the approach may further include an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of a motive force of vehicles such as automobiles) is provided to the battery pack via the external power distribution terminal.

Next, an example of a battery pack according to the approach will be described with reference to the drawings.

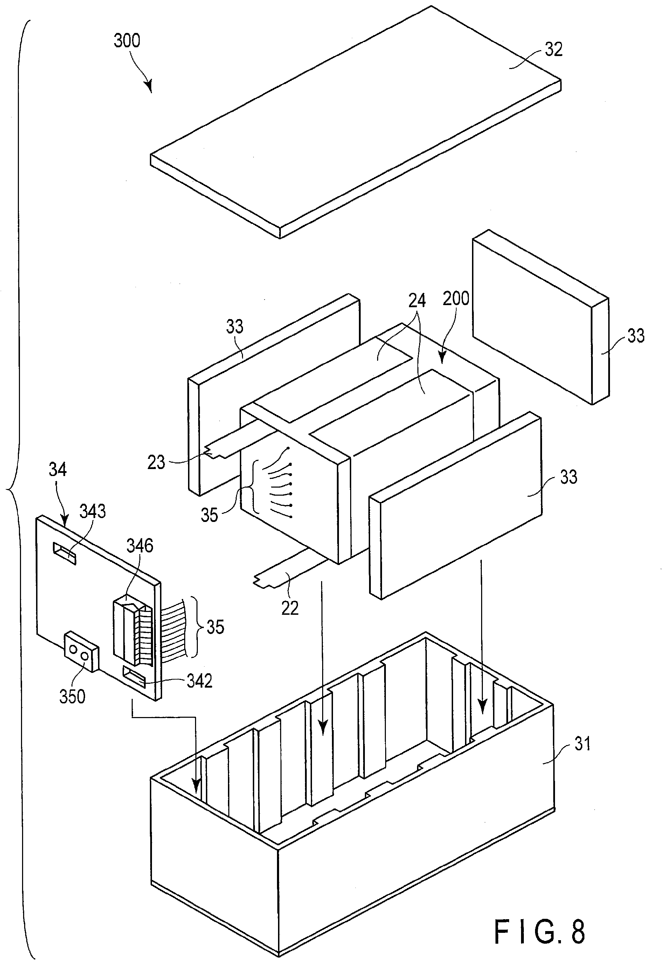

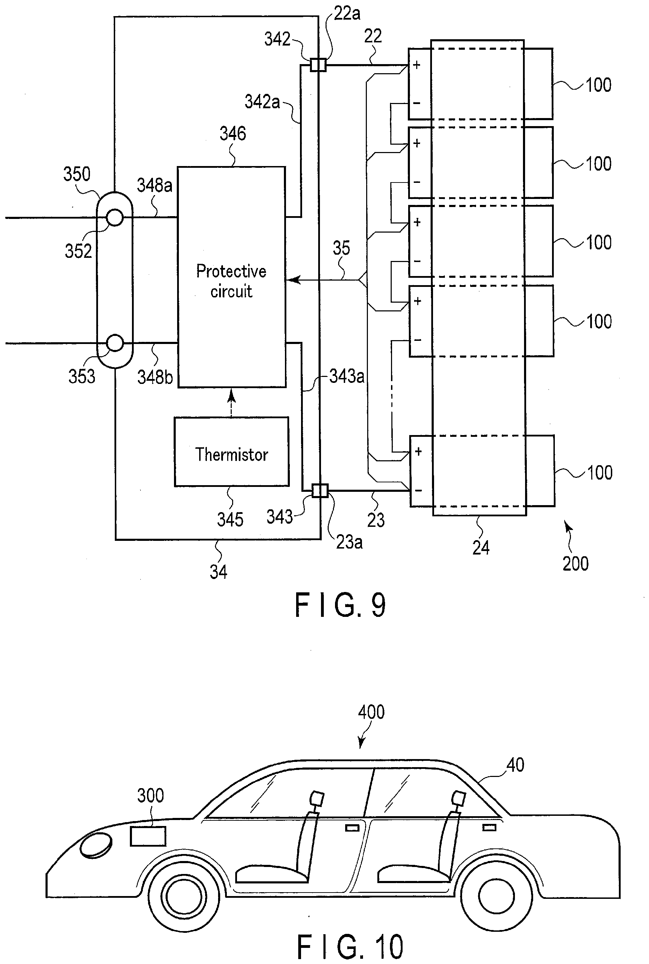

FIG. 8 is an exploded perspective view schematically showing an example of the battery pack according to the approach. FIG. 9 is a block diagram showing an example of an electric circuit of the battery pack shown in FIG. 8.

A battery pack 300 shown in FIGS. 8 and 9 includes a housing container 31, a lid 32, protective sheets 33, a battery module 200, a printed wiring board 34, wires 35, and an insulating plate (not shown).

A housing container 31 shown in FIG. 8 is a bottomed-square-shaped container having a rectangular bottom surface. The housing container 31 is configured to house protective sheet 33, a battery module 200, a printed wiring board 34, and wires 35. A lid 32 has a rectangular shape. The lid 32 covers the housing container 31 to house the battery module 200 and the like. Although not shown, opening(s) or connection terminal(s) for connecting to external device(s) and the like are provided on the housing container 31 and lid 32.

The battery module 200 includes plural unit cells 100, a positive electrode-side lead 22, a negative electrode-side lead 23, and an adhesive tape 24.

At least one in the plurality of unit cells 100 is a secondary battery according to the fourth approach. Each unit cell 100 in the plurality of unit cells 100 is electrically connected in series, as shown in FIG. 9. The plurality of unit cells 100 may alternatively be electrically connected in parallel, or connected in a combination of in-series connection and in-parallel connection. If the plurality of unit cells 100 is connected in parallel, the battery capacity increases as compared to a case where they are connected in series.

The adhesive tape 24 fastens the plural unit cells 100. The plural unit cells 100 may be fixed using a heat-shrinkable tape in place of the adhesive tape 24. In this case, the protective sheets 33 are arranged on both side surfaces of the battery module 200, and the heat-shrinkable tape is wound around the battery module 200 and protective sheets 33. After that, the heat-shrinkable tape is shrunk by heating to bundle the plural unit cells 100.

One terminal of a positive electrode lead 22 is connected to a battery module 200. One terminal of the positive electrode lead 22 is electrically connected to the positive electrode of one or more unit cells 100. One terminal of a negative electrode lead 23 is connected to the battery module 200. One terminal of the negative electrode lead 23 is electrically connected to the negative electrode of one or more unit cells 100.

The printed wiring board 34 is arranged on the inner surface of the housing container 31 along the short side direction. The printed wiring board 34 includes a positive electrode connector 342, a negative electrode connector 343, a thermistor 345, a protective circuit 346, wirings 342a and 343a, an external power distribution terminal 350, a plus-side wire (positive-side wire) 348a, and a minus-side wire (negative-side wire) 348b. One principal surface of the printed wiring board 34 faces one side surface of the battery module 200. An insulating plate (not shown) is disposed in between the printed wiring board 34 and the battery module 200.

The other terminal 22a of the positive electrode lead 22 is electrically connected to a positive electrode connector 342. The other terminal 23a of the negative electrode lead 23 is electrically connected to a negative electrode connector 343.

The thermistor 345 is fixed to one principal surface of the printed wiring board 34. The thermistor 345 detects the temperature of each unit cell 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive side terminal 352 and a negative side terminal 353.

The protective circuit 346 is fixed to the other principal surface of the printed wiring board 34. The protective circuit 346 is connected to the positive side terminal 352 via the plus-side wire 348a. The protective circuit 346 is connected to the negative side terminal 353 via the minus-side wire 348b. In addition, the protective circuit 346 is electrically connected to the positive electrode connector 342 via the wiring 342a. The protective circuit 346 is electrically connected to the negative electrode connector 343 via the wiring 343a. Furthermore, the protective circuit 346 is electrically connected to each unit cell 100 in the plurality of unit cells 100 via the wires 35.

The protective sheets 33 are arranged on both inner surfaces of the housing container 31 along the long side direction and on one inner surface of the housing container 31 along the short side direction facing the printed wiring board 34 through the battery module 200. The protective sheet 33 is made of, for example, resin or rubber.

The protective circuit 346 controls charging and discharging of the plurality of unit cells 100. The protective circuit 346 is also configured to cut off electric connection between the protective circuit 346 and the external power distribution terminal 350 (the positive side terminal 352 and the negative side terminal 353) to the external devices, based on detection signals transmitted from the thermistor 345 or detection signals transmitted from each unit cell 100 or the battery module 200.

An example of the detection signal transmitted from the thermistor 345 is a signal indicating that the temperature of the unit cell(s) 100 is detected to be a predetermined temperature or more. An example of the detection signal transmitted from each unit cell 100 or the battery module 200 is a signal indicating detection of over-charge, over-discharge, and overcurrent of the unit cell(s) 100. When detecting over-charge or the like for each of the unit cells 100, the battery voltage may be detected, or a positive electrode potential or negative electrode potential may be detected. In the latter case, a lithium electrode to be used as a reference electrode may be inserted into each unit cell 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include a plurality of battery modules 200. In this case, the plurality of battery modules 200 may be connected in series, in parallel, or connected in a combination of in-series connection and in-parallel connection. The printed wiring board 34 and the wires 35 may be omitted. In this case, the positive electrode lead 22 and the negative electrode lead 23 may be used as the positive side terminal and the negative side terminal of the external power distribution terminal, respectively.

Such a battery pack is used for, for example, an application required to have the excellent cycle performance when a large current is taken out. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

A battery pack according to a sixth approach includes the secondary battery according to the fourth approach or the battery module according to the fifth approach. Therefore, according to the sixth approach, it is possible to provide a battery pack including a secondary battery or a battery module exhibiting excellent input/output characteristics and high-temperature storage performance.

(Seventh approach)

According to the seventh approach, a vehicle is provided. The vehicle includes the battery pack according to the sixth approach.

In a vehicle according to the seventh approach, the battery pack is configured, for example, to recover regenerative energy from motive force of the vehicle. The vehicle may include a mechanism configured to convert kinetic energy of the vehicle into regenerative energy.

Examples of the vehicle according to the seventh approach include two- to four-wheeled hybrid electric automobiles, two- to four-wheeled electric automobiles, electric assist bicycles, and railway cars.

In the vehicle, the installing position of the battery pack is not particularly limited. For example, the battery pack may be installed in the engine compartment of the vehicle, in rear parts of the vehicle, or under seats.

A plurality of battery packs is loaded on the vehicle. In this case, the batteries included in each of the battery packs may be electrically connected to each other in series, in parallel, or in a combination of in-series connection and in-parallel connection. For example, in the case where each battery pack includes a battery module, the battery modules may be electrically connected to each other in series, in parallel, or in a combination of in-series connection and in-parallel connection. Alternatively, in the case where each battery pack includes a single battery, each of the batteries may be electrically connected to each other in series, in parallel, or in a combination of in-series connection and in-parallel connection.

Next, one example of the vehicle according to the seventh approach will be described with reference to the drawings.

FIG. 10 is a partially transparent diagram schematically illustrating one example of a vehicle according to the approach.

A vehicle 400 illustrated in FIG. 10 includes a vehicle body 40 and a battery pack 300 according to the approach. In the example illustrated in FIG. 10, the vehicle 400 is a four-wheeled automobile.

A plurality of the battery packs 300 may be loaded on the vehicle 400. In this case, the batteries included in the battery packs 300 (for example, unit cell or battery modules) may be connected in series, connected in parallel, or connected in a combination of in-series connection and in-parallel connection.

In FIG. 10, the battery pack 300 is installed in an engine compartment located at the front of the vehicle body 40. As described above, the battery pack 300 may be installed in rear sections of the vehicle body 40, or under a seat. The battery pack 300 may be used as a power source of the vehicle 400. In addition, the battery pack 300 can recover regenerative energy of a motive force of the vehicle 400.

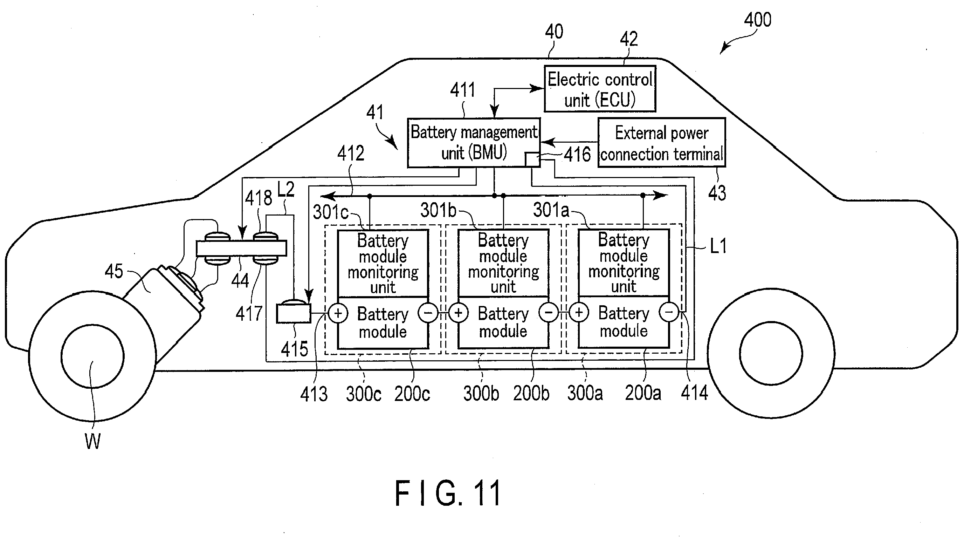

Next, an approach of the vehicle according to the seventh approach will be described with reference to FIG. 11.

FIG. 11 is a diagram schematically illustrating one example of a control system related to an electrical system in the vehicle according to the seventh approach. The vehicle 400 illustrated in FIG. 11 is an electric automobile.

The vehicle 400, shown in FIG. 11, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 11, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

A battery pack 300a is provided with a battery module 200a and a battery module monitoring apparatus 301a (for example, voltage temperature monitoring (VTM)). A battery pack 300b is provided with a battery module 200b and a battery module monitoring apparatus 301b. A battery pack 300c is provided with a battery module 200c and a battery module monitoring apparatus 301c. The battery packs 300a to 300c are battery packs similar to the battery pack 300 described earlier, and the battery modules 200a to 200c are battery modules similar to the battery module 200 described earlier. The battery modules 200a to 200c are electrically connected in series. The battery packs 300a, 300b, and 300c are removable independently of each other, and each can be replaced with a different battery pack 300.

Each of the battery modules 200a to 200c includes plural battery cells connected in series. At least one of the plural battery cells is the secondary battery according to the second approach. The battery modules 200a to 200c each perform charging and discharging via a positive electrode terminal 413 and a negative electrode terminal 414.

A battery management apparatus 411 communicates with the battery module monitoring apparatus 301a to 301c, and collects information related to the voltage, temperature, and the like for each of the unit cells 100 included in the battery modules 200a to 200c included in the vehicle power source 41. With this arrangement, the battery management apparatus 411 collects information related to the maintenance of the vehicle power source 41.

The battery management apparatus 411 and the battery module monitoring apparatus 301a to 301c are connected via a communication bus 412. In the communication bus 412, a set of communication wires are shared with a plurality of nodes (the battery management apparatus 411 and one or more of the battery module monitoring apparatus 301a to 301c). The communication bus 412 is a communication bus, for example, configured in accordance with the controller area network (CAN) standard.

The battery module monitoring units 301a to 301c measure a voltage and a temperature of each battery cell in the battery modules 200a to 200c based on commands from the battery management unit 411. It is possible, however, to measure the temperatures only at several points per battery module, and the temperatures of all of the battery cells need not be measured.

The vehicle power source 41 can also have an electromagnetic contactor (for example, a switch apparatus 415 illustrated in FIG. 11) that switches the presence or absence of an electrical connection between a positive electrode terminal 413 and a negative electrode terminal 414. The switch apparatus 415 includes a pre-charge switch (not illustrated) that turns on when the battery modules 200a to 200c are charged, and a main switch (not illustrated) that turns on when the output from the battery modules 200a to 200c is supplied to the load. Each of the pre-charge switch and the main switch is provided with a relay circuit (not illustrated) that switches on or off according to a signal supplied to a coil disposed near a switching element. The electromagnetic contactor such as the switch apparatus 415 is controlled according to of control signals from the battery management apparatus 411 or the vehicle ECU 42 that controls the entire operation of the vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management apparatus 411, or the vehicle ECU 42 which controls the entire operation of the vehicle. By controlling the inverter 44, the output voltage from the inverter 44 is adjusted.

The drive motor 45 is rotated by electric power supplied from the inverter 44. The driving force produced by the rotation of the drive motor 45 is transmitted to an axle (or axles) and drive wheels W via a differential gear unit for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connection line L1 is connected to the negative electrode terminal 414 of the vehicle power source 41. The other terminal of the connection line L1 is connected to a negative electrode input terminal 417 of the inverter 44. On the connection line L1, a current detector (current detection circuit) 416 is provided inside the battery management apparatus 411 between the negative electrode terminal 414 and the negative electrode input terminal 417.

One terminal of a connection line L2 is connected to the positive electrode terminal 413 of the vehicle power source 41. The other terminal of the connection line L2 is connected to a positive electrode input terminal 418 of the inverter 44. On the connection line L2, the switch apparatus 415 is provided between the positive electrode terminal 413 and the positive electrode input terminal 418.

The external terminal 43 is connected to the battery management apparatus 411. The external terminal 43 can be connected to, for example, an external power source.

The vehicle ECU 42 cooperatively controls the vehicle power source 41, the switch apparatus 415, the inverter 44, and the like together with other management apparatus and control apparatus, including the battery management apparatus 411, in response to operation input from a driver or the like. By the cooperative control by the vehicle ECU 42 and the like, the output of electric power from the vehicle power source 41, the charging of the vehicle power source 41, and the like are controlled, and the vehicle 400 is managed as a whole. Data related to the maintenance of the vehicle power source 41, such as the remaining capacity of the vehicle power source 41, is transferred between the battery management apparatus 411 and the vehicle ECU 42 by a communication line.

A vehicle according to a seventh approach is mounted with the battery pack according to the sixth approach. Therefore, according to the seventh approach, it is possible to provide a vehicle including a battery pack exhibiting excellent input/output characteristics and high-temperature storage performance.

[Examples]

Although Examples will be described hereinafter, the approaches are not limited to Examples to be described hereinafter.

(Example 1)

$Nb_2O_5$ particles and $TiO_2$ particles were mixed at a molar ratio of 1:1 using a dry bead mill. The obtained powder was placed in an alumina crucible and heated at a temperature of 800°C for 10 hours. Then, grinding and mixing were performed, and temporary firing was performed at a temperature of 800°C again for 10 hours to obtain precursor particles. Further, the obtained precursor particles were subjected to main firing at 1000°C for 5 hours to obtain $Nb_2TiO_7$ powder. When the obtained $Nb_2TiO_7$ powder was measured by a laser diffraction type distribution measuring device, its median diameter (D50) was 4.0 $\mu$m.

The obtained $Nb_2TiO_7$ powder, an electro-conductive agent, a binder and a solvent were mixed to prepare a first slurry. As the electro-conductive agent, a mixture of acetylene black and graphite was used. In this mixture, a mass ratio of acetylene black to graphite was 1:2. As the binder, a mixture of carboxylmethyl cellulose (CMC) and styrene butadiene rubber (SBR) was used. In this mixture, a mass ratio of CMC to SBR was 1:1. As the solvent, N-methyl-2-pyrrolidone (NMP) was used.

Then, this slurry was divided into two batches to obtain a second slurry and a third slurry. One of the two divided batches, i.e., the second slurry, was ground and mixed in a continuous bead mill ($ZrO_2$ balls, volume filling rate: 70%) under second condition, in order to obtain $Nb_2TiO_7$ powder having a small particle size, so that a fourth slurry was obtained. The second condition is, here, grinding and mixing for 30 minutes under a condition of 1000 rpm. When a particle size distribution of the obtained fourth slurry was measured using the laser diffraction type distribution measuring device, the median diameter was 1.8 $\mu$m.

The other of the two divided batches, i.e., the third slurry, was ground and mixed in a continuous bead mill ($ZrO_2$ balls, volume filling rate: 70%) under third condition, in order to obtain $Nb_2TiO_7$ powder having a large particle size, so that a fifth slurry was obtained. The third condition is, here, grinding and mixing for 30 minutes under a condition of 300 rpm. When a particle size distribution of the obtained fifth slurry was measured using the laser diffraction type distribution measuring device, the median diameter was 3.6 $\mu$m.

After mixing the fourth slurry and the fifth slurry at a mass ratio of 50:50, the obtained mixture was stirred with a disper for 30 minutes to obtain a sixth slurry as an electrode-producing slurry.

<Production of electrode>

An electrode was produced as follows.

The sixth slurry prepared previously was applied to one side of a current collector, and the coating film was dried to form an active material-containing layer. As the current collector, an aluminum foil having a thickness of 12 $\mu$m was used. Next, the current collector and the active material-containing layer were pressed at a predetermined press pressure to obtain an electrode having an electrode density of 2.6g/cm$^3$. The electrode density is a density of the active material-containing layer excluding the current collector. Also in Examples 2 to 5 and Comparative Examples 1 to 5 which will be described later, the electrodes were pressed at the same press pressure (common press pressure) as in Example 1.

<Preparation of nonaqueous electrolyte>

Ethylene carbonate and diethyl carbonate were mixed at a volume ratio of 1:2 to prepare a mixed solvent. Lithium hexafluorophosphate was dissolved, at a concentration of 1M (mol/L), in this mixed solvent to prepare a nonaqueous electrolyte.

<Production of electrochemical measurement cell>

Using the electrode produced above, a metallic lithium foil as a counter electrode, and the prepared nonaqueous electrolyte, an electrochemical measurement cell according to Example 1 was produced.

(Examples 2 and 3)

An electrode was produced in the same manner as in Example 1 except that the rotation speed under the second condition and the rotation speed under the third condition were changed as shown in Table 2 below, and an electrochemical measurement cell was produced using this electrode.

(Example 4)

An electrode was produced in the same manner as in Example 3 except that the mixing ratio between the fourth slurry and the fifth slurry was changed to 80:20, and an electrochemical measurement cell was produced using this electrode.

(Example 5)

An electrode was produced in the same manner as in Example 3 except that the mixing ratio between the fourth slurry and the fifth slurry was changed to 20:80, and an electrochemical measurement cell was produced using this electrode.

(Comparative Example 1)

The first slurry produced by the same method as in Example 1 was not divided into two batches, but was ground and mixed in a continuous bead mill (ZrO$_2$ balls, volume filling rate: 70%) for 30 minutes under the condition of 800 rpm. When a particle size distribution of the obtained slurry was measured using the laser diffraction type distribution measuring device, its median diameter (D50) was 2.2 $\mu$m.

In Table 2 below, for convenience, the conditions for grinding and mixing the first slurry according to Comparative Example 1 and Comparative Example 2 which will be described later are shown in the columns "Rotation speed in second condition" and "Grinding time in second condition" and the median diameter of the obtained slurry is shown in the column "Fourth slurry median diameter".

(Comparative Example 2)

The first slurry produced by the same method as in Example 1 was not divided into two batches, but was ground and mixed in a continuous bead mill (ZrO$_2$ balls, volume filling rate: 70%) for 30 minutes under the condition of 2100 rpm. When a particle size distribution of the obtained slurry was measured using the laser diffraction type distribution measuring device, its median diameter (D50) was 1.0 $\mu$m.

(Comparative Example 3)

An electrode was produced in the same manner as in Example 3 except that the rotation speed in the third condition was 100 rpm and the mixing ratio between the fourth slurry and the fifth slurry was changed to 33:67, and an electrochemical measurement cell was produced using this electrode.

(Comparative Example 4)

An electrode was produced in the same manner as in Example 1 except for the conditions indicated below, and an electrochemical measurement cell was produced using this electrode.

When the $Nb_2TiO_7$ powder used for producing the first slurry was produced, grain growth was promoted by changing the temperature at the time of the main firing to 1300°C, and the median diameter of the $Nb_2TiO_7$ powder was 4.7 $\mu$m. The rotation speed under the second condition was changed to 2500 rpm, and the rotation speed in the third condition was changed to 100 rpm. The mixing ratio between the fourth slurry and the fifth slurry was changed to 33:67.

<Measurement of particle size distribution>

For each of the electrodes produced as Examples and Comparative Examples, the active material powder was isolated by the method described in the first approach, and the particle size distribution of the active material powder was measured. From the obtained particle size distribution chart, the median diameter (D50) of the active material particles contained in the electrode was determined. In addition, the number of peaks included in the chart, and the particle size corresponding to the position of the peak top of each peak and its height (frequency) were determined. When one chart has two peaks, the peak appearing at a position with a relatively small particle size is defined as a peak A, and the peak appearing at a position with a relatively large particle size is defined as a peak B. In addition, based on the same chart, it was investigated what proportion of the integrated amount of particles having a particle size of 2.0 $\mu$m or less was with respect to the entire active material particles on a volume basis. These results are summarized in Table 1.

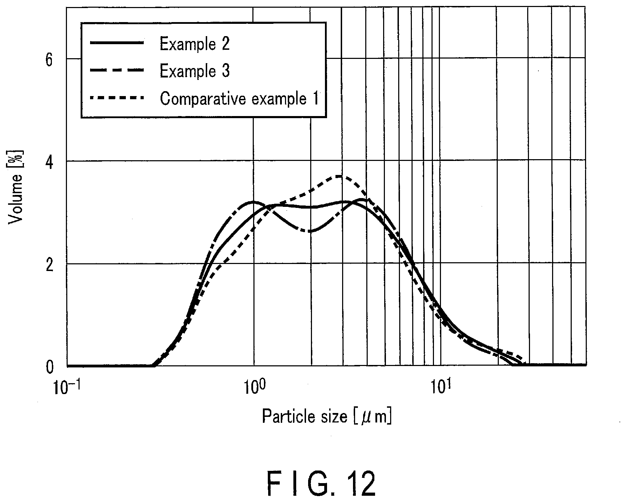

FIG. 12 shows the particle size distribution charts of Examples 2 and 3 and Comparative Example 1. The particle size distribution charts according to Examples 2 and 3 each had two peak tops in a particle size range of 0.5 $\mu$m to 8.0 $\mu$m. As shown in Table 1, the median diameter (D50) is in the range of 1.2 $\mu$m to 4.0 $\mu$m, and the proportion of the integrated amount of particles having a particle size of 2.0 $\mu$m or less was in the range of 36% to 62% with respect to the entire active material particles on a volume basis. On the other hand, the particle size distribution chart according to Comparative Example 1 had only one peak existing in the range of 0.5 $\mu$m to 8.0 $\mu$m. Therefore, it was found that the active material particles contained in the active material-containing layer included in the electrode according to Comparative Example 1 have a unimodal particle mode. In Comparative Example 1, as shown in Table 1, a peak appeared at a position of 1.8 $\mu$m.

<Ten (10)-second resistance measurement>

After adjusting the state of charge (SOC) of the electrochemical measurement cell to 50%, the electrochemical measurement cell was discharged at a constant current of 3C rate (negative electrode active material equivalent) for 10 seconds. The 10-second resistance [mΩ] is calculated from the following formula, where a difference between the voltage after discharge and the voltage before power distribution is ΔV. In the following formula, I represents a current value. The value of the 10-second resistance is an index for evaluating the input/output characteristics.

$$(10\text{-second resistance}) = \Delta V / I$$

<Storage performance evaluation>

The electrochemical measurement cell was charged to 2.75V at a constant current of 1C rate (negative electrode active material equivalent) under a 25°C environment, and then discharged to 2.1 V at 1C to measure an initial discharge capacity. After that, it was charged to 2.75 V at a constant current of 1C rate (negative electrode active material equivalent), left in a 45°C environment for 50 days, and then discharged to 2.1 V at 1C in a 25°C environment.

As an index of storage performance, a self-discharge rate (%) was calculated from the following formula. The self-discharge rate calculated by the following formula indicates that the higher the value, the better the storage performance.

$$(\text{Self-discharge rate}) = 100 - (\text{discharge capacity}$$
$$\text{after leaving at } 45°C \text{ for } 50 \text{ days/initial discharge}$$
$$\text{capacity}) \times 100$$

The above results are summarized in Tables 1 and 2. In Table 1, the column "Number of peak tops" shows the number of peak tops in the frequency distribution chart. The frequency distribution charts of Examples 1 to 5 and Comparative Example 3 had two peaks in the particle size range of 0.5 $\mu$m to 8.0 $\mu$m. In the frequency distribution chart according to Comparative Example 4, as shown in Table 1, the peak A appeared in the particle size range of 0.5 $\mu$m to 8.0 $\mu$m, but the appearance position of the peak B exceeded 8.0 $\mu$m. The column "Peak top particle size difference" shows a difference between the particle size corresponding to the peak top of the peak A and the particle size corresponding to the peak top of the peak B. Since the particle size distribution charts according to Comparative Examples 1 and 2 each had only one peak, the peak position and peak height of this peak are shown in the columns "Peak A position" and "Peak A height", respectively.

[Table 1 ]

| Table 1 | Active material composition | D50 ($\mu$m) | Number of peak tops | Proportion [%] (volume equivalent) of particles of 2 $\mu$m or less | Peak A position ($\mu$m) | Peak A height (vol%) | Peak B position ($\mu$m) | Peak B height (vol%) | Peak top particle size difference ($\mu$m) | 10-second resistance (m$\Omega$) | Self-discharge rate (%) |
|---|---|---|---|---|---|---|---|---|---|---|---|
| Example 1 | $Nb_2TiO_7$ | 2.4 | 2 | 42.5 | 1.8 | 3.0 | 3.3 | 3.6 | 1.5 | 30.3 | 97.3 |
| Example 2 | $Nb_2TiO_7$ | 2.1 | 2 | 47.0 | 1.4 | 3.2 | 3.3 | 3.2 | 1.9 | 29.0 | 96.9 |
| Example 3 | $Nb_2TiO_7$ | 2.0 | 2 | 48.3 | 1.1 | 3.2 | 3.9 | 3.3 | 2.8 | 31.1 | 98.1 |
| Example 4 | $Nb_2TiO_7$ | 1.5 | 2 | 61.2 | 1.1 | 4.1 | 1.9 | 3.3 | 0.9 | 27.2 | 97.4 |
| Example 5 | $Nb_2TiO_7$ | 3.6 | 2 | 37.6 | 1.2 | 2.9 | 5.5 | 3.5 | 4.3 | 32.2 | 98.2 |
| Comparative Example 1 | $Nb_2TiO_7$, | 2.2 | 1 | 44.7 | 1.8 | 3.3 | - | - | - | 35.1 | 97.0 |
| Comparative Example 2 | $Nb_2TiO_7$ | 1.0 | 1 | 68.9 | 1.0 | 4.6 |  |  |  | 28.2 | 92.0 |
| Comparative Example 3 | $Nb_2TiO_7$ | 3.7 | 2 | 32.2 | 1.0 | 2.1 | 6.0 | 4.3 | 5.0 | 36.4 | 98.4 |
| Comparative Example 4 | $Nb_2TiO_7$ | 4.5 | 2 | 36.0 | 0.9 | 2.4 | 10.1 | 2.6 | 9.2 | 37.7 | 98.8 |

[Table 2]

| Table 2 | Rotation speed (rpm) in second condition (at the time of production of small particle size slurry) | Grinding time (min) in second condition (at the time of production of small particle size slurry) | Fourth slurry median diameter ($\mu$m) | Rotation speed (rpm) in third condition (at the time of production of large particle size slurry) | Grinding time (min) in third condition (at the time of production of large particle size slurry) | Fifth slurry median diameter ($\mu$m) | Mixing ratio (by mass) between fourth slurry and fifth slurry |
|---|---|---|---|---|---|---|---|
| Example 1 | 1000 | 30 | 1.8 | 300 | 30 | 3.6 | 50:50 |
| Example 2 | 1500 | 30 | 1.4 | 500 | 30 | 3.3 | 50:50 |
| Example 3 | 2000 | 30 | 1.1 | 500 | 30 | 3.3 | 50:50 |
| Example 4 | 2000 | 30 | 1.1 | 500 | 30 | 3.3 | 80:20 |
| Example 5 | 2000 | 30 | 1.1 | 500 | 30 | 3.3 | 20:80 |
| Comparative Example 1 | 800 | 30 | 2.2 | - | | - | 100:0 |
| Comparative Example 2 | 2100 | 30 | 1.0 | - | - | - | 100:0 |
| Comparative Example 3 | 2000 | 30 | 1.1 | 100 | 30 | 4.0 | 33:67 |
| Comparative Example 4 | 2500 | 30 | 1.1 | 100 | 30 | 4.7 | 33:67 |

The following can be seen from Tables 1 and 2.

The active material particles contained in the each of electrodes according to Examples 1 to 5 have a median diameter in the range of 1.2 $\mu$m to 4.0 $\mu$m, have two peaks in the range of 0.5 $\mu$m to 8.0 $\mu$m, and the proportion (volume equivalent) of particles having a particle size of 2.0 $\mu$m or less was in the range of 36% to 62%. Therefore, all of the electrodes according to Examples 1 to 5 had excellent input/output characteristics and high-temperature storage performance in a well-balanced manner.

On the other hand, when the active material particles had a unimodal particle mode as in Comparative Example 1, the 10-second resistance was inferior even though the median diameter was substantially the same as in Examples 1 to 3. The self-discharge rate was also substantially the same as in Examples 1 and 2. As shown in Comparative Example 2, when D50 was reduced in a unimodal mode, the input/output characteristics were excellent, but the self-discharge rate was significantly reduced. It is considered that this is because the specific surface area of the active material particles became too large so that the reactivity between the active material particles and the electrolytic solution was high.

Since Comparative Examples 3 and 4 had two peaks in the range of 0.5 $\mu$m to 8.0 $\mu$m, it can be seen that the active material particles according to these examples were all in a bimodal form. Comparative Example 3 and Example 5 are compared. These examples were substantially the same in median diameter. However, in Comparative Example 3, the proportion of the integrated amount of particles having a particle size of 2.0 $\mu$m or less was less than 36% by volume with respect to the entire active material particles. Therefore, it is considered that a good electron conduction network was not formed due to a large proportion of coarse particles. As a result, Comparative Example 3 and Example 5 were substantially the same in self-discharge rate, but the 10-second resistance was remarkably larger in Comparative Example 3.

Further, in Comparative Example 4, the proportion of the integrated amount of particles having a particle size of 2.0 $\mu$m or less to the entire active material particles was larger than that of Comparative Example 3, but the median diameter of Comparative Example 4 exceeded 4.0 $\mu$m. That is, it can be seen that Comparative Example 4 contained more fine particles and more coarse particles as compared with Comparative Example 3. This can also be read from comparison between the positions and heights of the peaks A and B according to Comparative Example 3 and the positions and heights of the peaks A and B according to Comparative Example 4. In Comparative Example 4, there is a possibility that, since the proportion of the fine particles to the entire active material particles was excessively large, the number of contacts between the particles increased more than necessary so that the resistance increased.

As shown in Examples 1 to 4, when the difference between the particle size corresponding to the peak top of the peak A and the particle size corresponding to the peak top of the peak B is within the range of 0.5 $\mu$m or more and 3.0 $\mu$m or less, excellent input/output characteristics could be achieved while the deterioration in storage performance was suppressed. In the bimodal particle form, when the two peaks have an appropriate particle size difference of 0.5 $\mu$m or more and 3.0 $\mu$m or less, the small particle group can appropriately fill gaps between large particles formed by densely collecting the large particle group. In other words, the active material powder satisfying the above-described particle size difference requirement contains a large number of small particles having a size suitable for filling the gaps between the large particles. In this case, a good electron conductive network is constructed while an excessive increase in specific surface area is suppressed. Therefore, it is considered that Examples 1 to 4 were excellent in both input/output characteristics and high-temperature storage performance.

According to at least one approach and example described above, an electrode is provided. The electrode includes a current collector and an active material-containing layer formed on the current collector and containing active material particles. The active material particles include a monoclinic niobium-titanium composite oxide. A median diameter (D50) calculated from a volume-based frequency distribution chart obtained by a laser diffraction/scattering method for the active material particles is in the range of 1.2 $\mu$m to 4.0 $\mu$m. The frequency distribution chart has two peaks in the range of 0.5 $\mu$m to 8.0 $\mu$m. In the frequency distribution chart, a proportion of an integrated amount of particles having a particle size of 2.0 $\mu$m or less is in the range of 36% to 62% with respect to the entire active material particles on a volume basis.

According to the electrode, a secondary battery having a high energy density and excellent cycle life characteristics can be achieved.

The present disclosure also encompasses the following approaches:

1. An electrode (3) comprising:

    a current collector (3a); and
    an active material-containing layer (3b) formed on the current collector (3a) and comprising active material particles,
    wherein the active material particles comprise a monoclinic niobium-titanium composite oxide,
    a median diameter calculated from a volume-based frequency distribution chart obtained by a laser diffraction/scattering method for the active material particles is in the range of 1.2 $\mu$m to 4.0 $\mu$m,
    the frequency distribution chart has two peaks in the range of 0.5 $\mu$m to 8.0 $\mu$m, and
    in the frequency distribution chart, a proportion of an integrated amount of particles having a particle size of 2.0 $\mu$m or less is in the range of 36% to 62% with respect to the entire active material particles on a volume basis.

2. The electrode (3) according to clause 1, wherein the two peaks in the frequency distribution chart consist of a peak A having a peak top in the range of 0.5 $\mu$m or more and 1.8 $\mu$m or less, and a peak B having a peak top in the range of more than 1.8 $\mu$m and 8.0 $\mu$m or less.

3. The electrode (3) according to clause 2, wherein the peak A has the peak top in the range of 1.0 $\mu$m or more and 1.8 $\mu$m or less, and the peak B has the peak top in the range of more than 1.8 $\mu$m and 4.5 $\mu$m or less.

4. The electrode (3) according to clause 2 or 3,
wherein a difference between a particle size corresponding to the peak top of the peak A and a particle size corresponding to the peak top of the peak B is 0.5 $\mu$m or more and 3.0 $\mu$m or less.

5. The electrode (3) according to any one of clauses 1 to 4,

    wherein the monoclinic niobium-titanium composite oxide is at least one selected from the group consisting of a composite oxide represented by the general formula $Li_xTi_{1-y}M1_yNb_{2-z}M2_zO_{7+\delta}$ and a composite oxide represented by the general formula $Li_xTi_{1-y}M3_{y+z}Nb_{2-z}O_{7-\delta}$,
    M1 is at least one selected from the group consisting of Zr, Si, and Sn, the M2 is at least one selected from the group consisting of V, Ta, and Bi, and the M3 is at least one selected from the group consisting of Mg, Fe, Ni, Co, W, Ta, and Mo, and
    the x satisfies $0 \leq x \leq 5$, the y satisfies $0 \leq y < 1$, the z satisfies $0 \leq z < 2$, and the $\delta$ satisfies $-0.3 \leq \delta \leq 0.3$.

6. A secondary battery (100) comprising:

    a positive electrode (5);
    a negative electrode (3); and
    an electrolyte,

wherein the negative electrode (3) is the electrode (3) according to any one of clauses 1 to 5.

7. A battery pack (300) comprising the secondary battery (100) according to clause 6.

8. The battery pack (300) according to clause 7, further comprising:

an external power distribution terminal (350); and
a protective circuit (346).

9. The battery pack (300) according to clause 7 or 8, further comprising:

a plurality of the secondary battery (100),
the secondary batteries (100) are electrically connected in series, in parallel, or in series and in parallel in combination.

10. A vehicle (400) comprises the battery pack (300) according to any one of clauses 7 to 9.

11. The vehicle (400) according to clause 10, comprising a mechanism configured to convert kinetic energy of the vehicle (400) into regenerative energy.

12. A method for manufacturing an electrode-producing slurry, comprising:

obtaining a monoclinic niobium-titanium composite oxide powder having a median diameter in the range of 1.5 $\mu$m to 6.0 $\mu$m in a frequency distribution chart obtained by a laser diffraction/scattering method;
mixing the monoclinic niobium-titanium composite oxide powder, an electro-conductive agent, a binder and a solvent to obtain a first slurry;
dividing the first slurry into two to obtain a second slurry and a third slurry;
grinding and mixing the second slurry to prepare a fourth slurry having a median diameter in the range of 1.1 $\mu$m to 1.8 $\mu$m in the frequency distribution chart obtained by the laser diffraction/scattering method;
grinding and mixing the third slurry to obtain a fifth slurry having a median diameter in the range of 3.0 $\mu$m to 4.0 $\mu$m in the frequency distribution chart obtained by the laser diffraction/scattering method; and
mixing the fourth slurry and the fifth slurry at a mass ratio of 80:20 to 20:80 to obtain a sixth slurry.

13. The method for manufacturing the electrode-producing slurry according to clause 12, wherein the second slurry is ground and mixed by a bead mill using a grinding medium having a diameter of 0.05 mm to 5.0 mm according to a second condition, and
the second condition comprises a rotation speed in the range of 1000 rpm to 2500 rpm and a grinding time in the range of 10 minutes to 40 minutes.

14. The method for manufacturing the electrode-producing slurry according to clause 12 or 13,

wherein the third slurry is ground and mixed by a bead mill using a grinding medium having a diameter of 0.05 mm to 5.0 mm according to a third condition, and
the third condition includes a rotation speed in the range of 200 rpm to 600 rpm and a grinding time in the range of 10 minutes to 40 minutes.

15. A method for manufacturing an electrode (3), comprising:

applying an electrode-producing slurry obtained by the manufacturing method according to any one of clauses 12 to 14 to at least one surface of a current collector (3a) to obtain a stack.
While certain approaches have been described, these approaches have been presented by way of example only, and are not intended to limit the scope of the claims. Indeed, the novel electrodes described herein may be embodied in a variety of other forms; furthermore, various omissions, substitutions and changes in the form of the electrodes described herein may be made

**Claims**

1. An electrode (3) comprising:

a current collector (3a); and
an active material-containing layer (3b) formed on the current collector (3a) and comprising active material particles,
wherein the active material particles comprise a monoclinic niobium-titanium composite oxide,
a median diameter calculated from a volume-based frequency distribution chart obtained by a laser diffraction/scattering method for the active material particles is in the range of 1.2 $\mu$m to 4.0 $\mu$m,
the frequency distribution chart has two peaks in the range of 0.5 $\mu$m to 8.0 $\mu$m, and
in the frequency distribution chart, a proportion of an integrated amount of particles having a particle size of 2.0 $\mu$m or less is in the range of 36% to 62% with respect to the entire active material particles on a volume basis.

2. The electrode (3) according to claim 1, wherein the two peaks in the frequency distribution chart consist of a peak A having a peak top in the range of 0.5 $\mu$m or more and 1.8 $\mu$m or less, and a peak B having a peak top in the range of more than 1.8 $\mu$m and 8.0 $\mu$m or less.

3. The electrode (3) according to claim 2, wherein the peak A has the peak top in the range of 1.0 $\mu$m or more and 1.8 $\mu$m or less, and the peak B has the peak top in the range of more than 1.8 $\mu$m and 4.5 $\mu$m or less.

4. The electrode (3) according to claim 2 or 3,
wherein a difference between a particle size corresponding to the peak top of the peak A and a particle size corresponding to the peak top of the peak B is 0.5 $\mu$m or more and 3.0 $\mu$m or less.

5. The electrode (3) according to any one of claims 1 to 4,

wherein the monoclinic niobium-titanium composite oxide is at least one selected from the group consisting of a composite oxide represented by the general formula $Li_xTi_{1-y}M1_yNb_{2-z}M2_zO_{7+\delta}$ and a composite oxide represented by the general formula $Li_xTi_{1-y}M3_{y+z}Nb_{2-z}O_{7-\delta}$,
M1 is at least one selected from the group consisting of Zr, Si, and Sn, the M2 is at least one selected from the group consisting of V, Ta, and Bi, and the M3 is at least one selected from the group consisting of Mg, Fe, Ni, Co, W, Ta, and Mo, and
the x satisfies $0 \leq x \leq 5$, the y satisfies $0 \leq y < 1$, the z satisfies $0 \leq z < 2$, and the $\delta$ satisfies $-0.3 \leq \delta \leq 0.3$.

6. A secondary battery (100) comprising:

a positive electrode (5);
a negative electrode (3); and
an electrolyte,
wherein the negative electrode (3) is the electrode (3) according to any one of claims 1 to 5.

7. A battery pack (300) comprising the secondary battery (100) according to claim 6.

8. The battery pack (300) according to claim 7, further comprising:

an external power distribution terminal (350); and
a protective circuit (346).

9. The battery pack (300) according to claim 7 or 8, further comprising:

a plurality of the secondary battery (100),
the secondary batteries (100) are electrically connected in series, in parallel, or in series and in parallel in combination.

10. A vehicle (400) comprises the battery pack (300) according to any one of claims 7 to 9.

11. The vehicle (400) according to claim 10, comprising a mechanism configured to convert kinetic energy of the vehicle (400) into regenerative energy.

12. A method for manufacturing an electrode-producing slurry, comprising:

obtaining a monoclinic niobium-titanium composite oxide powder having a median diameter in the range of 1.5 $\mu$m to 6.0 $\mu$m in a frequency distribution chart obtained by a laser diffraction/scattering method;

mixing the monoclinic niobium-titanium composite oxide powder, an electro-conductive agent, a binder and a solvent to obtain a first slurry;

dividing the first slurry into two to obtain a second slurry and a third slurry;

grinding and mixing the second slurry to prepare a fourth slurry having a median diameter in the range of 1.1 $\mu$m to 1.8 $\mu$m in the frequency distribution chart obtained by the laser diffraction/scattering method;

grinding and mixing the third slurry to obtain a fifth slurry having a median diameter in the range of 3.0 $\mu$m to 4.0 $\mu$m in the frequency distribution chart obtained by the laser diffraction/scattering method; and

mixing the fourth slurry and the fifth slurry at a mass ratio of 80:20 to 20:80 to obtain a sixth slurry.

13. The method for manufacturing the electrode-producing slurry according to claim 12, wherein the second slurry is ground and mixed by a bead mill using a grinding medium having a diameter of 0.05 mm to 5.0 mm according to a second condition, and

the second condition comprises a rotation speed in the range of 1000 rpm to 2500 rpm and a grinding time in the range of 10 minutes to 40 minutes.

14. The method for manufacturing the electrode-producing slurry according to claim 12 or 13,

wherein the third slurry is ground and mixed by a bead mill using a grinding medium having a diameter of 0.05 mm to 5.0 mm according to a third condition, and

the third condition includes a rotation speed in the range of 200 rpm to 600 rpm and a grinding time in the range of 10 minutes to 40 minutes.

15. A method for manufacturing an electrode (3), comprising:

applying an electrode-producing slurry obtained by the manufacturing method according to any one of claims 12 to 14 to at least one surface of a current collector (3a) to obtain a stack.

F I G. 1

F I G. 2

FIG. 3

FIG. 4

FIG. 5

FIG.6

F I G. 7

F I G. 8

F I G. 9

F I G. 10

FIG. 11

F I G. 12

Europäisches
Patentamt

European
Patent Office

Office européen
des brevets

# EUROPEAN SEARCH REPORT

**Application Number**

**EP 22 15 7721**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/395605 A1 (HOSHINA KEIGO [JP] ET AL) 17 December 2020 (2020-12-17) | 1-11 | INV. H01M4/131 |
| A | * paragraph [0014] – paragraph [0193]; figure 2; table 1 * | 12-15 | H01M4/485 H01M4/62 H01M50/204 |
| | ----- | | |
| Y | US 2014/027679 A1 (KIM YE RI [KR] ET AL) 30 January 2014 (2014-01-30) | 1-11 | |
| A | * paragraph [0014] – paragraph [0193]; table 1 * | 12-15 | |
| | ----- | | |

**TECHNICAL FIELDS SEARCHED (IPC)**

H01M

The present search report has been drawn up for all claims

| Place of search | Date of completion of the search | Examiner |
|---|---|---|
| Munich | 18 July 2022 | Radeck, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**EP 4 084 124 A1**

## ANNEX TO THE EUROPEAN SEARCH REPORT
## ON EUROPEAN PATENT APPLICATION NO.

EP 22 15 7721

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2022

| Patent document cited in search report | | Publication date | Patent family member(s) | | Publication date |
|---|---|---|---|---|---|
| US 2020395605 | A1 | 17-12-2020 | BR 112020018115 | A2 | 22-12-2020 |
| | | | CN 111727519 | A | 29-09-2020 |
| | | | EP 3780164 | A1 | 17-02-2021 |
| | | | JP 6965435 | B2 | 10-11-2021 |
| | | | JP WO2019187129 | A1 | 07-01-2021 |
| | | | US 2020395605 | A1 | 17-12-2020 |
| | | | WO 2019187129 | A1 | 03-10-2019 |
| US 2014027679 | A1 | 30-01-2014 | EP 2712009 | A1 | 26-03-2014 |
| | | | PL 2712009 | T3 | 31-03-2020 |
| | | | US 2014027679 | A1 | 30-01-2014 |
| | | | WO 2014010973 | A1 | 16-01-2014 |

For more details about this annex : see Official Journal of the European Patent Office, No. 12/82